(19) Europäisches Patentamt
European Patent Office
Office européen des brevets

(11) **EP 2 345 847 B1**

(12) # EUROPEAN PATENT SPECIFICATION

(45) Date of publication and mention
of the grant of the patent:
**24.07.2019 Bulletin 2019/30**

(51) Int Cl.:
**F23R 3/34** *(2006.01)*    **F23R 3/28** *(2006.01)*
**F23R 3/12** *(2006.01)*    **F23D 14/24** *(2006.01)*

(21) Application number: **11150899.0**

(22) Date of filing: **13.01.2011**

(54) **Gas turbine combustor**

Gasturbinenbrennkammer

Chambre de combustion de turbine à gaz

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.01.2010 JP 2010004697**

(43) Date of publication of application:
**20.07.2011 Bulletin 2011/29**

(73) Proprietor: **Mitsubishi Hitachi Power Systems,
Ltd.
Yokohama 220-8401 (JP)**

(72) Inventors:
- **Dodo, Satoshi
  Tokyo 100-8220 (JP)**
- **Koizumi, Hiromi
  Tokyo 100-8220 (JP)**

- **Takahashi, Hirokazu
  Tokyo 100-8220 (JP)**
- **Asai, Tomohiro
  Tokyo 100-8220 (JP)**
- **Miura, Keisuke
  Tokyo 100-8220 (JP)**

(74) Representative: **MERH-IP Matias Erny Reichl
Hoffmann
Patentanwälte PartG mbB
Paul-Heyse-Strasse 29
80336 München (DE)**

(56) References cited:
**EP-A2- 1 921 381    EP-A2- 1 985 920
EP-A2- 1 985 926    JP-A- H02 259 331
US-A1- 2009 031 728**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

**Description**

**1. Background of the Invention**

The present invention relates to a gas turbine combustor including a plurality of coaxial nozzles.

As one of power generation plants that support industrial electric power, there is a gas turbine power generation plant that uses fossil resources such as natural gas and petroleum as fuel. Since the gas turbine power generation plant uses the fossil resources as the fuel and emits carbon dioxide ($CO_2$), which is a global warming substance, further improvement of power generation efficiency is demanded.

Examples of means for improving the power generation efficiency include an increase in temperature of combustion gas emitted from a gas turbine combustor.

However, according to the increase in temperature of the combustion gas, nitrogen oxides (NOx), which is an environment inhibiting substance, included in the combustion gas exponentially increases. Therefore, a measure for reducing NOx while improving the power generation efficiency is an important technical object.

Therefore, in recent years, from the viewpoint of global warming prevention other than a reduction in power generation cost and effective use of resources, there is a demand for effectively using, as gasified fuel for a gas turbine combustor used in a gas turbine for power generation, by-product gas including hydrogen ($H_2$) such as off-gas generated in an oil refinery and a coke oven gas (COG; hereinafter abbreviated as COG) generated in a steel manufacturing process.

In a coal gasification power generation plant (IGCC: Integrated coal Gasification Combined Cycle; hereinafter abbreviated as IGCC) that gasifies coal, which is an abundant resource, with oxygen to generate electric power, from the viewpoint of global warming prevention, a system for separating and collecting carbon components in gas fuel supplied to a gas turbine combustor of the coal gasification power generation plant is studied in Japan and overseas. Moreover, from the viewpoint of global environment protection, there is a strong demand for improvement of power generation efficiency and a reduction in contaminated emission substances of the coal gas power generation plant.

In the oil refinery off-gas and the COG, 30% to 60% of fuel components are hydrogen. In an IGCC plant with a carbon dioxide separating and collecting apparatus, most of components of fuel are hydrogen. Since combustion speed of hydrogen is high, it is likely that flame formed in the gas turbine combustor approaches a combustor structure because of a change in hydrogen concentration and causes a problem in reliability.

Not only the hydrogen concentration of the off-gas of the oil refinery and the by-product gas of the COG but also hydrogen concentration in the IGCC plant substantially changes because of a change in a carbon dioxide collection ratio. Therefore, there is a demand for a measure for dealing with the likelihood that combustion speed increases according to a situation and flame approaches a structure of the gas turbine combustor and causes a problem in reliability.

Among the objects, as an example of a technique for dealing with a change in hydrogen concentration, JP-A-2007-113487 discloses a technique for separately supplying, when a gas turbine load suddenly falls in combustion of low-calorie gas including hydrogen in a fuel composition, a necessary amount of hydrogen gas to fuel gas to prevent misfire of a gas turbine combustor and maintaining safe combustion in the combustor.

As an example of the structure for realizing low NOx combustion while securing combustion stability, JP-A-2008-292139 discloses a technique for arranging, in a coaxial nozzle burner of a gas turbine combustor in which a large number of coaxial nozzles including coaxially-arranged small-aperture fuel nozzles and air nozzles are assembled and dispersibility of fuel and the air is structurally increased in advance to reduce NOx (hereinafter abbreviated as multi-coaxial-injection-hole burner), plural fuel nozzles having different shapes of tips, giving distribution of an air fuel mixture of fuel and air supplied to the multi-coaxial-injection-hole burner, and realizing low NOx combustion while securing combustion stability.

EP 1 985 920 A2 describes a combustor according to the preamble of claim 1.

**2. Brief Summary of the Invention**

However, the technique of the gas turbine combustor disclosed in JP-A-2007-113487 merely maintains necessary minimum output when the gas turbine load suddenly falls. A technique for dealing with fluctuation in hydrogen concentration with respect to a wide load range is not disclosed.

The technology of the gas turbine combustor disclosed in JP-A-2008-292139 merely maintains combustion stability concerning fuel having a sable composition and realizes low NOx combustion. A technique for dealing with fluctuation in hydrogen concentration with respect to a wide load range is not disclosed.

When the low-calorie gas fuel including hydrogen in a fuel composition is used for the gas turbine combustor, since combustion speed of hydrogen is high, it is highly likely that, when flame formed in the gas turbine combustor approaches the combustor structure, the flame causes a problem in reliability.

Even when the gas turbine combustor is designed to prevent the flame from approaching the structure of the gas turbine combustor, not only the hydrogen concentration of the off-gas of the oil refinery and the COG but also hydrogen concentration included in combustion gas in the IGCC plant substantially changes because of a change in a carbon dioxide collection ratio. Therefore, there is a demand for dealing with the problem in which the flame approaches the structure of the gas turbine combustor according to a situation of a change in the hydrogen concentration.

As a combustion system for securing reliability of the gas turbine combustor with respect to a change in the concentration of hydrogen included in combustion gas, a diffusing combustion system for directly inputting only fuel into a combustion chamber of the gas turbine combustor and performing mixing of the fuel and the air in the combustion chamber is prospective. However, in this combustion system, since flame is formed for the air fuel mixture, which is most easily burned, flame temperature rises and the emission of nitrogen oxides (NOx) tends to increase.

From the viewpoint of global environment protection, besides a reduction in carbon dioxide, a reduction in NOx, which is a main causative agent of acid rain and photochemical smog is also important. A combustion system for the gas turbine combustor for dealing with fluctuation in a wide range of hydrogen concentration and performing low NOx combustion is necessary.

On the other hand, to perform low NOx combustion, a pre-mixing combustion system for mixing fuel and the air in advance to be more dilute than a stoichiometric mixture ratio and supplying the air fuel mixture to the gas turbine combustor is prospective. However, in this pre-mixing combustion system, the air fuel mixture in a combustible range is formed before the air fuel mixture flows into the combustion chamber of the gas turbine combustor. Therefore, when the concentration of hydrogen included in combustion gas changes to increase, since the position of flame formed in the combustion chamber approaches the structure of the gas turbine combustor, it is highly likely that a problem in reliability of the gas turbine combustor is caused.

Even when the hydrogen concentration changes to decrease, since the dilute air fuel mixture is burned in the combustion chamber, it is highly likely that combustion speed and a combustible range fluctuate to cause combustion instability.

It is an object of the present invention to provide a gas turbine combustor that can suppress, when a hydrogen concentration of a fuel used for the gas turbine combustor fluctuates, fluctuation in a flame position due to the fluctuation in the hydrogen concentration in a wide load range to maintain combustion stability with high reliability and maintain low NOx combustion performance.

**3. Brief Description of the Several Views of the Drawings**

Fig. 1 is a schematic view of a coal gasification combined power generation plant including a gas turbine combustor according to an embodiment of the present invention;
Fig. 2 is a schematic sectional view showing the structure of the gas turbine combustor according to the embodiment of the present invention;
Fig. 3 is a partial side sectional view of an air plate of plural main multi-coaxial-injection-hole burners set in the gas turbine combustor according to the embodiment of the present invention;
Fig. 4 is a partial view showing air holes of the air plate formed in the main multi-coaxial-injection-hole burners of the gas turbine combustor according to the embodiment shown in Fig. 3;
Fig. 5 is a view of the air plate, viewed from a combustion chamber side, including the air holes formed in the main multi-coaxial-injection-hole burners of the gas turbine combustor according to the embodiment shown in Fig. 3;
Fig. 6 is a view of a state of a flow near the air hole of fluid flowing through a fuel nozzle and the air hole included in the main multi-coaxial-injection-hole burner set in the gas turbine combustor according to the embodiment of the present invention;
Fig. 7 is a characteristic diagram showing a change in a fuel flow rate in the coal gasification combined power generation plant according to the embodiment of the present invention shown in Fig. 1 with respect to the number of revolutions of gas turbine operation and a gas turbine load;
Fig. 8 is a view of a state of a flow of fluid injected from fuel nozzles and the air holes included in the main multi-coaxial-injection-hole burner of the gas turbine combustor according to the embodiment of the present invention and combustion gas in the combustion chamber;
Fig. 9 is a characteristic diagram showing conditions for maintaining stable steady flame of the main multi-coaxial-injection-hole burners in the gas turbine combustor according to the embodiment of the present invention;
Fig. 10 is a characteristic diagram showing conditions for not causing flame approach in the main multi-coaxial-injection-hole burners in the gas turbine combustor according to the embodiment of the present invention;
Fig. 11 is a characteristic diagram showing a change in hydrogen concentration in an air fuel mixture that occurs when an inner circumferential fuel ratio of the main multi-coaxial-injection-hole burners in the gas turbine combustor according to the embodiment of the present invention is changed and a change in hydrogen concentration in the case of a comparative example;

Fig. 12 is a characteristic diagram of a state of a change in distribution of a fuel supply amount with respect to a change in hydrogen concentration in a rated load in the main multi-coaxial-injection-hole burners of the gas turbine combustor according to the embodiment of the present invention and a state of a change in distribution of a fuel supply amount in the case of the comparative example; and

Fig. 13 is a characteristic diagram of changes in combustion gas temperature on the inner circumferences of the main multi-coaxial-injection-hole burners and emission NOx from the gas turbine combustor at the time when the inner circumferential fuel ratio of the main multi-coaxial-injection-hole burners in the gas turbine combustor according to the embodiment of the present invention is changed and a change in emission NOx in the case of the comparative example.

Fig. 14 is a partial side sectional view of an air plate set in the gas turbine combustor according to a modified embodiment of the present invention;

Fig. 15 is a partial view showing air holes of the air plate formed in the main multi-coaxial-injection-hole burners of the gas turbine combustor according to the embodiment shown in Fig. 14;

Fig. 16 is a view of the air plate, viewed from a combustion chamber side, including the air holes formed in the main multi-coaxial-injection-hole burners of the gas turbine combustor according to the embodiment shown in Fig. 14;

## 4. Detailed Description of the Invention

A gas turbine combustor, a fuel supply apparatus for the gas turbine combustor, and a fuel supply method for the gas turbine combustor according to an embodiment of the present invention are explained below with reference to the accompanying drawings.

Embodiments

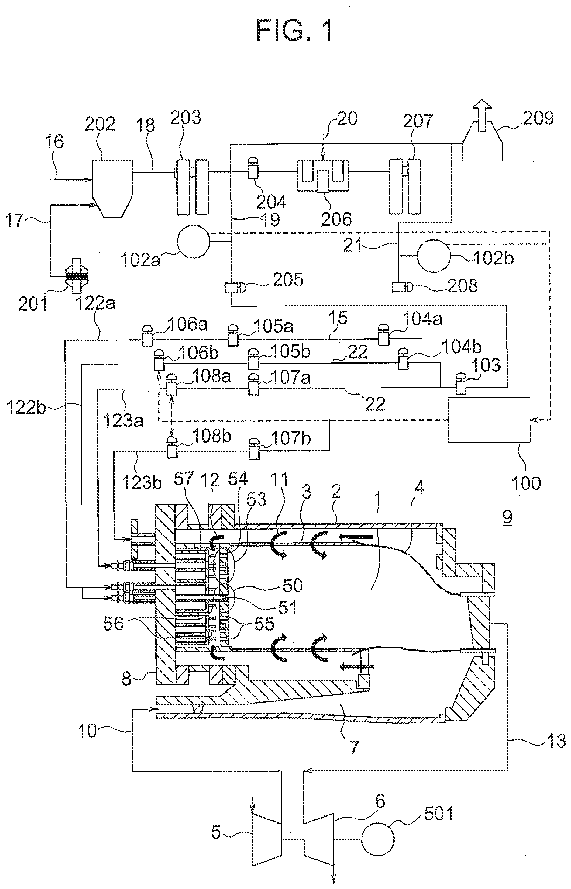

The gas turbine combustor according to the embodiment of the present invention is explained with reference to Figs. 1, 2, and 12.

Fig. 1 is a schematic diagram of a coal gasification combined power generation plant including a gas turbine plant including a gas turbine combustor according to a first embodiment of the present invention.

The gas turbine combustor according to the present invention may be applied to, besides the coal gasification combined power generation plant explained below, a gas turbine that uses, as fuel, coke oven gas (COG), which is by-product gas obtained from a steel manufacturing plant, blast furnace gas (BFG), or Linzer Donawiz gas (LDG) or mixed gas of these gases and a gas turbine that uses, as fuel, by-product gas obtained from a naphtha cracking plant or the like.

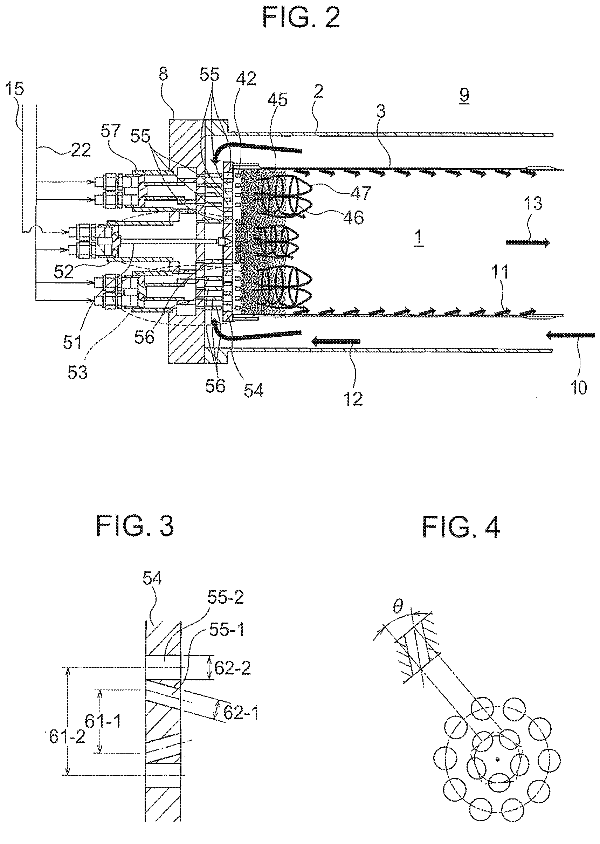

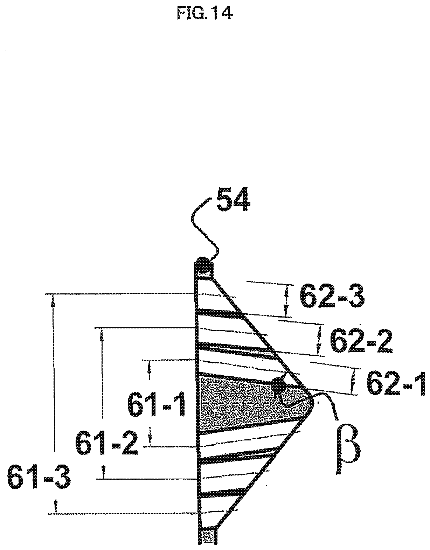

Fig. 2 is a sectional view showing the schematic structure of the gas turbine combustor according to the first embodiment of the present invention shown in Fig. 1. Figs. 3 to 5 are partial diagrams each showing air hole plates of wall-like members, in which air holes are formed, included in multi-coaxial-injection-hole burners set in the gas turbine combustor according to the first embodiment according to the present invention shown in Figs. 1 and 2. Figs. 14 to 16 are partial diagrams each showing air hole plates, in which air holes are formed, included in multi-coaxial-injection-hole burners set in the gas turbine combustor according to the a modified embodiment which can alternatively be used for the embodiment of Figs. 1 and 2.

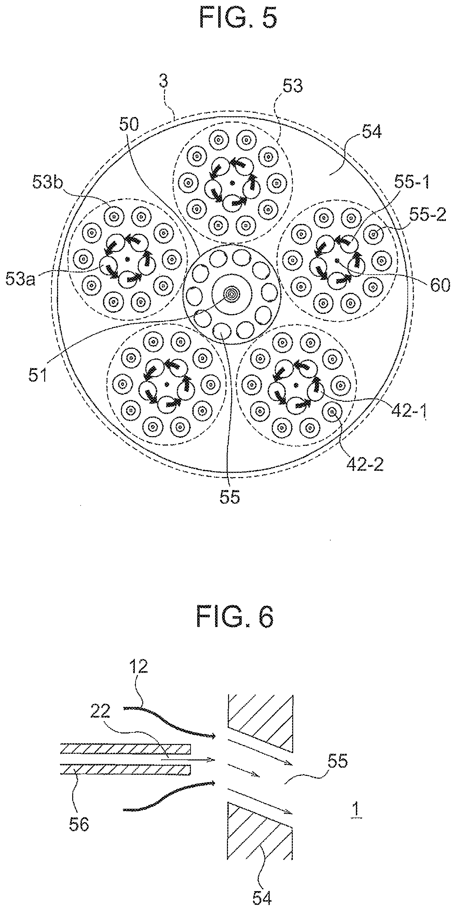

Fig. 6 is an enlarged diagram showing a state of a flow of fluid near a single fuel nozzle included in the main multi-coaxial-injection-hole burner and a single air hole arranged to correspond to the single fuel nozzle and formed in the air hole plate included in the main multi-coaxial-injection-hole burner in the gas turbine combustor according to the first embodiment of the present invention shown in Figs. 2 to 5.

In a coal gasification combined power generation (CCS-IGCC) plant with a carbon dioxide separating and collecting apparatus shown in Fig. 1 including the gas turbine plant including the gas turbine combustor according to the first embodiment of the present invention, coal gasified fuel 22 including hydrogen in a fuel composition generated by gasifying coal is supplied to the gas turbine plant.

The gas turbine plant driven by the coal gasified fuel 22 generated by the coal gasification combined power generation plant supplies compressed air 10, which is obtained by sucking and compressing the outdoor air with a compressor 5, to a gas turbine combustor 9 as combustion air 12 through a casing 7 and injects, together with the coal gasified fuel 22, the combustion air 12 to a combustion chamber from main multi-coaxial-injection-hole burners 53 set in the gas turbine combustor 9.

The gas turbine plant includes a generator 501 that causes high-temperature and high-pressure combustion gas 13 generated by burning the coal gasified fuel 22 with the gas turbine combustor 9 to flow into a turbine 6, drives the turbine 6, and extracts rotational power of the turbine 6 as electric power.

The gas turbine combustor 9 has a cylindrical structure including a combustor outer cylinder 2 set on the outer circumferential side, a combustor liner 3 set on an inside of the combustor outer cylinder 2, and a combustor tail pipe 4 connected to a downstream side of the combustor liner 3. A cylindrical combustion chamber 1 for burning the coal gasified fuel 22 and the combustion air 12 is formed on an inside of the combustor liner 3.

The combustor liner 3 having a cylindrical combustor outlet and a stationary blade inlet shape serving as an inlet of the turbine 6 are connected by the combustor tail pipe 4 for smoothly connecting the combustor liner 3 and the stationary blade inlet shape.

The combustion air 12 used for combustion of the coal gasified fuel 22 in the combustion chamber 1 of the gas turbine combustor 9 is supplied through a space between the combustor outer cylinder 2 and the combustor liner 3 of the gas turbine combustor 9. However, the combustion air 12 is stopped by a combustor end cover 8 provided at the top of the gas turbine combustor 9. A part of the combustion air 12 is supplied to plural air holes 55 formed in an air hole plate 54 on which the main multi-coaxial-injection-hole burners 53 are formed.

The other part of the combustion air 12 flows into the combustion chamber 1 as cooling air 11 from a large number of air holes for combustion opened on the wall surface of the combustor liner 3. The other part of the combustion air 12 cools the high-temperature and high-pressure combustion gas 13 generated in the combustion chamber 1 of the gas turbine combustor 9.

The coal gasified fuel 22 supplied to the gas turbine combustor 9 is distributed from an outside of the combustor end cover 8 to each of fuel nozzles 56 of the main multi-coaxial-injection-hole burners 53 through a distribution channel of a fuel distributor 57 provided on an inside of the end cover 8.

The gas turbine plant including the gas turbine combustor 9 according to this embodiment is set in a coal gasification combined power generation plant with a carbon dioxide collecting apparatus. The gas turbine plant includes a fuel supply system 122a that separately supplies, from an outside, start fuel 15 for carrying out start of the coal gasification combined power generation plant until the coal gasification oven 202 starts and the coal gasified fuel 22 is supplied to the gas turbine plant.

Therefore, the gas turbine combustor 9 according to the embodiment of the gas turbine plant set in the coal gasification combined power generation plant has, as shown in Figs. 1, 2, and 3 to 5, structure in which a pilot burner 50 including a fuel injection nozzle for start 51 is provided in a center of the axis of the combustor and five main multi-coaxial-injection-hole burners 53 having a multi-coaxial-injection-hole burner structure are arranged around the pilot burner 50 on an outer circumferential side of the axis of the combustor. When the start fuel 15 can be supplied relatively inexpensively and abundantly, to enable stable operation and simplified control, the pilot burner 50 may be a dispersion burner operated by the start fuel 15 separately supplied from the outside for mono-fuel combustion. If the multi-coaxial-injection-hole burner structure is adopted for the pilot burner, it is possible to configure a gas turbine combustor that can perform lower NOx combustion.

In the coal gasification combined power generation plant shown in Fig. 1, first, the start fuel 15 is supplied to the pilot burner 50 of the gas turbine combustor 9 according to this embodiment through a fuel supply system 122a and the gas turbine plant is started to a fixed load in advance. The operation of the coal gasification oven 202 that generates coal gas from coal, a coal gasification gas purifier 203, a shift reactor 206 that generates carbon dioxide and hydrogen from the coal gas generated by the coal gasification oven 202, and a carbon dioxide collecting apparatus 207 that collects the carbon dioxide generated by the shift reactor 206 is started. Consequently, the coal gasified fuel 21 including the hydrogen generated by the coal gasification oven 202 is supplied to the gas turbine combustor 9 as the coal gasified fuel 22 according to this embodiment through the fuel supply system 122a.

In gasification of coal in the coal gasification combined power generation plant, first, oxygen 17 purified by an oxygen producing apparatus 201 and coal 16 are changed to pre-purification coal gasification gas 18, which contains carbon monoxide and hydrogen as main components, by the coal gasification oven 202. Impurities and the like are removed by the gas purifier 203 to produce coal gasification gas 19 before carbon dioxide collection.

A part of the produced coal gasification gas 19 before carbon dioxide collection is supplied to gas turbine fuel supply systems 122b, 123a, and 123b on the downstream side, which lead to the gas turbine combustor 9, as the coal gasified fuel 22 through the fuel system 22a including a hydrogen concentration detecting unit 102a via a flow regulating valve 205. A part of the coal gasification gas 19 is led to the shift reactor 206 via a flow regulating valve 204. The remaining gas is subjected to combustion treatment in a gas treatment oven 209.

The shift reactor 206 supplies water vapor 20 to the coal gasification gas 19 before carbon dioxide collection to cause a shift reaction. The shift reactor 206 converts carbon monoxide in a composition into carbon dioxide and hydrogen and sends the carbon dioxide and the hydrogen to the carbon dioxide collecting apparatus 207. The carbon dioxide collecting apparatus 207 collects the water vapor and the carbon dioxide to purify the coal gasification gas 21 having high hydrogen concentration.

The coal gasification gas 21 having high hydrogen concentration is also supplied to the gas turbine fuel supply systems 122b, 123a, and 123b on the downstream side, which lead to the gas turbine combustor 9, as the coal gasified fuel 22 through the fuel system 22a including the hydrogen concentration detecting unit 102b via the flow regulating valve 208. The remaining gas is subjected to combustion treatment in the gas treatment oven 209.

In the coal gasification combined power generation plant according to this embodiment, the coal gasified fuel 22 is supplied to the gas turbine combustor 9. The coal gasified fuel 22 includes hydrogen in the fuel composition obtained by mixing the coal gasification gas 19 before carbon dioxide collection and the coal gasification gas 21 having high hydrogen concentration according to operation states of the gasification oven 202, the shift reactor 206, and the carbon dioxide collecting apparatus 207.

When the coal gasified fuel 22 is started to be supplied from the coal gasification combined power generation plant, the start fuel 15 is replaced with the coal gasified fuel 22. Therefore, the gas turbine combustor 9 includes the pilot burner 50 including the fuel injection nozzle for start 51 that injects the start fuel 15, which is led through the fuel system 122b, to the center of the axis of the combustor and the air holes 55 for supplying combustion air for the start fuel 15.

The gas turbine combustor 9 has structure in which plural main multi-coaxial-injection-hole burners 53 formed in multi-coaxial-injection-hole burner structure including the fuel nozzles 56 arranged coaxially to the air holes 55 are arranged on an outer circumferential side of the pilot burner 50, which is the outer circumferential side of the axis of the combustor. In the gas turbine combustor 9 according to this embodiment shown in Fig. 5, the gas turbine combustor 9 has structure in which five main multi-coaxial-injection-hole burners 53 are arranged.

Therefore, the fuel supply system 122a that supplies the start fuel 15 to the pilot burner 50 of the gas turbine combustor 9 as pilot fuel before the start of the coal gasification combined power generation plant is disposed. A start fuel and pilot burner fuel shut-off valve 104a that adjusts a flow rate of the start fuel 15, a start fuel and pilot burner fuel pressure regulating valve 105a, and the start fuel and pilot burner fuel flow rate regulating valve 106a are set in the fuel supply system 122a.

The fuel supply system 122b that supplies the coal gasified fuel 22 to the pilot burner 50 set in the gas turbine combustor 9 as pilot fuel after the start of the coal gasification combined power generation plant is disposed. A coal gasified fuel and pilot burner fuel shut-off valve 104b that adjusts a flow rate of the coal gasified fuel 22, a coal gasified fuel and pilot burner fuel pressure regulating valve 105b, and the coal gasified fuel and pilot burner fuel flow rate regulating valve 106b are set in the fuel supply system 122b.

Further, in each of the plural main multi-coaxial-injection-hole burners 53 set in the gas turbine combustor 9, the fuel supply system 123a that supplies the coal gasified fuel 22 to first coaxial injection burner sections 53a, which are provided on an inner circumferential side of the main multi-coaxial-injection-hole burner 53, as fuel is disposed. An inner circumferential side main fuel pressure regulating valve 107a and an inner circumferential side main fuel flow rate regulating valve 108a that adjust a flow rate of the coal gasified fuel 22 are set in the fuel supply system 123a.

In each of the plural main multi-coaxial-injection-hole burners 53 set in the gas turbine combustor 9, the fuel supply system 123b that supplies the coal gasified fuel 22 to second coaxial injection burner sections 53b, which are provided on the outer circumferential side of the main multi-coaxial-injection-hole burner 53 (an outer circumferential side of the first coaxial injection burner sections 53a), as fuel is disposed. An outer circumferential side main fuel pressure regulating valve 107b and an outer circumferential side main fuel flow rate regulating valve 108b that adjust a flow rate of the coal gasified fuel 22 are set in the fuel supply system 123b.

Concerning the plural main multi-coaxial-injection-hole burners 53 set on an outer circumferential side of the pilot burner 50 of the gas turbine combustor 9, the multi-coaxial-injection-hole burner structure is adopted as explained above.

The multi-coaxial-injection-hole burners included in the main multi-coaxial-injection-hole burners 53 are burners that form a large number of coaxial injections of fuel and the air. A degree of mixing of the fuel and the air can be adjusted according to the shape of air nozzles and the shape of fuel nozzles included in the main multi-coaxial-injection-hole burners 53.

A flame holding ability of a single burner included in each of the main multi-coaxial-injection-hole burners 53 can be adjusted according to mixing of and injecting directions of coaxial injections of the first coaxial injection burner sections 53a set on an inner circumferential side facing a center axis of the main multi-coaxial-injection-hole burner 53. Therefore, it is possible to cause the coaxial injrctions of the first coaxial injection burner sections 53a, which are inner circumferential sections in the main multi-coaxial-injection-hole burner 53, to carry out a function of flame holding.

The mixing of the fuel and the air is adjusted by the first coaxial injection burner sections 53a on the inner circumferential side of the main multi-coaxial-injection-hole burner 53 to intensify the function of flame holding as explained above. Consequently, a position where an air fuel mixture in the combustible range is formed in the combustion chamber 1 can be designed in a position away from the structure of the main multi-coaxial-injection-hole burner 53 in a downstream direction of the combustion chamber of the gas turbine combustor 9. Therefore, concerning the coaxial nozzles on the inner circumferential side, it is possible to secure large tolerance with respect to flame approach.

Therefore, in the gas turbine combustor 9 according to this embodiment, in the main multi-coaxial-injection-hole burners 53 included in a main burner, a fuel system is divided into the fuel supply system 123a and the fuel supply system 123b such that the coal gasified fuel 22 is independently supplied to the first coaxial injection burner sections 53a set on an inner circumferential side and the second coaxial injection burner sections 53b set on the outer circumferential side. The distribution and flow rates of the fuel supplied to the fuel supply system 123a and the fuel supply system 123b can be adjusted.

A part of the coal gasified fuel 22 supplied to the main multi-coaxial-injection-hole burners 53 is led to a joint port of the combustor end cover 8 of the gas turbine combustor 9 through the inner circumferential side main fuel pressure regulating valve 107a and the inner circumferential side main fuel flow rate regulating valve 108a set in the fuel supply system 123a and the fuel supply system 123a.

The other part of the coal gasified fuel 22 is led to the joint port of the combustor end cover 8 of the gas turbine combustor 9 through the outer circumferential side main fuel pressure regulating valve 107b and the outer circumferential side main fuel flow rate regulating valve 108b set in the fuel supply system 123b and the fuel supply system 123b.

The coal gasified fuel 22 led to the joint port passes through a channel on the inside of the end cover 8 and blows out from an outer circumferential side space of the fuel distributor 57 to the air holes 55 opened in the air hole plate 54 through the fuel nozzles 56 included in the main multi-coaxial-injection-hole burners 53. The coal gasified fuel 22 changes to an injection coaxial with the air, blows out from the main multi-coaxial-injection-hole burners 53 to the combustion chamber 1 of the gas turbine combustor 9, and is burned.

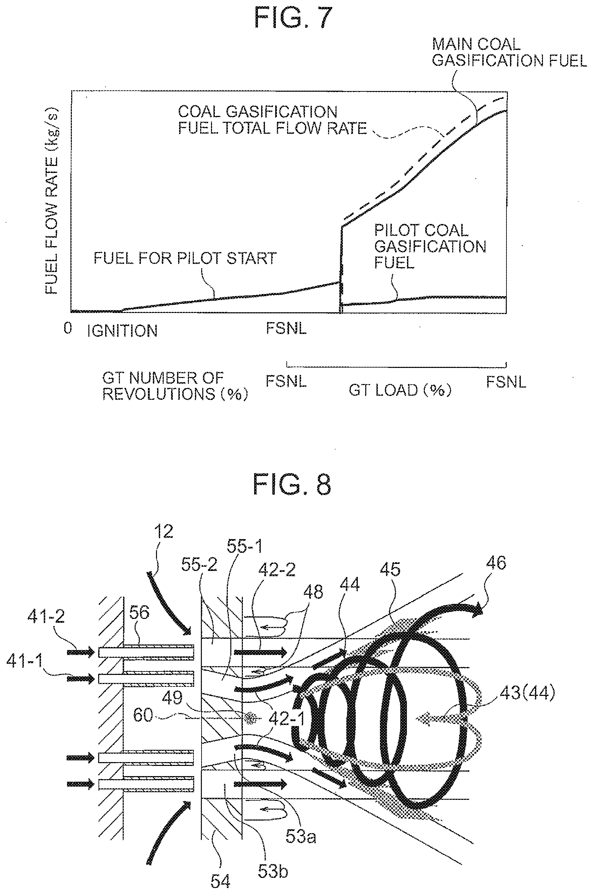

A change in a fuel flow rate that occurs when the gas turbine plant including the gas turbine combustor according to this embodiment included in the CCS-IGCC is operated is organized with respect to the number of revolutions of the gas turbine and a gas turbine load and shown in Fig. 7.

As explained above, in the CCS-IGCC plant, first, the gas turbine is started to a fixed load by the start fuel 15. The coal gasification oven 202, the coal gasification gas purifier 203, the shift reactor 206, and the carbon dioxide collecting apparatus 207 start operation and the coal gasified fuel 21 including hydrogen is supplied.

In Fig. 1, first, the start fuel 15 is supplied to the gas turbine combustor 9 of the gas turbine plant, which is started to the number of revolutions for ignition by a not-shown start motor, through the fuel supply system 122. Up to a certain load through a rated number of revolutions no-load operation state (FSNL: Full Speed No Load), the gas turbine is operated only by the pilot burner 50 of the gas turbine combustor 9 operated by the start fuel 15.

When the output of the gas turbine reaches a fixed load and house power for the oxygen producing apparatus 201 or the like can be covered, the operation of the coal gasification oven 202 and the like is started. The supply of the coal gasified fuel 22 is started from the CCS-IGCC plant, switching of fuel from the start fuel 15 to the coal gasified fuel 22 is carried out and the fuel is supplied to the gas turbine combustor 9.

The coal gasified fuel 22 is supplied to the pilot burner 50 and the main multi-coaxial-injection-hole burners 53 set in the gas turbine combustor 9. Thereafter, gas turbine operation is carried out only by the coal gasified fuel 22 up to a rated load (FSFL: Full Speed Full Load).

In Fig. 7, a fuel flow rate after the fuel switching to the coal gasified fuel 22 substantially increases because a heat value per weight of the coal gasified fuel 22 is small compared with the start fuel 15 and a larger amount of fuel is necessary to realize the temperature of the combustion gas 13 at the turbine inlet.

However, even if the production of the coal gasified fuel 22 is started in the CCS-IGCC plant, if vapor production in an exhaust gas boiler not shown in Fig. 1 is insufficient, a water vapor amount necessary for carbon dioxide separation and collection cannot be secured. Therefore, at first, in the coal gasified fuel 22, a ratio of the coal gasification gas 19 before carbon dioxide collection having low hydrogen concentration. The coal gasified fuel 22 is supplied under a condition that hydrogen concentration is low.

Therefore, in the CCS-IGCC plant, the hydrogen concentration in the coal gasified fuel 22 supplied to the gas turbine combustor 9 substantially changes according to a gas turbine operation state.

[Table 1]

Table 1

| Item | Unit | Composition example A | Composition example B | Composition example C |
|---|---|---|---|---|
| Carbon dioxide collection ratio | % | 0 | 50 | 90 |
| Hydrogen concentration | vol.% | 27 | 58 | 82 |
| Other gas component | vol.% | 73 | 42 | 18 |

Table 1 shows an example of a fuel composition used in the coal gasification combined power generation plant according to the first embodiment of the present invention shown in Fig. 1. The fuel composition example shown in Table 1 is an example in the coal gasification combined power generation plant (the CCS-IGCC plant). The compositions shown in Table 1 slightly change according to a plant operation state and a type of material coal in use. However, as it is seen from Table 1, in the CCS-IGCC plant, hydrogen concentration substantially changes from about 25% until the hydrogen concentration exceeds 80% according to the plant operation state.

The schematic structure of the gas turbine combustor 9 according to this embodiment is explained below with reference to Figs. 2 and 6. The gas turbine combustor 9 according to this embodiment includes, on the inside of the combustor outer cylinder 2, the combustor liner 3 that burns an air fuel mixture 42 of fuel and the air on an inside thereof and the combustion chamber 1 formed on the inside of the combustor liner 3.

The compressed air 10 supplied from the compressor 5 flows into the gas turbine combustor 9 through the space between the combustor outer cylinder 2 and the combustor liner 3. A part of the compressed air 10 changes to the cooling air 11 for cooling the combustor liner 3. The remainder of the compressed air 10 enters a space between the combustor end cover 8 and the air hole plate 54 as the combustion air 12.

On the other hand, the coal gasified fuel 22 flows into the fuel distributor 57 from the outside of the combustor end cover 8 and is blown out from the plural fuel nozzles 56 arranged on an upstream side of the air hole plate 54 on which the main multi-coaxial-injection-hole burners 53 are formed.

In the air hole plate 54, the plural air holes 55 are respectively arranged in the circumferential direction to be coaxial with center axes of the plural burners provided in the air hole plate 54 corresponding to the plural fuel nozzles 56.

A fuel flow and an air flow blown out from the air holes 55 are burned in the combustion chamber 1 and form a flame 45. Thereafter, the combustion gas 13 flows to the downstream side in the combustor tail pipe 4 not shown in Fig. 2, flows into the turbine 6, and drives the generator 501.

Fig. 6 is an enlarged schematic diagram of a distal end of a single fuel nozzle 56 included in one coaxial injection burner among a large number of coaxial injection burners included in the main multi-coaxial-injection-hole burner 53 and the air hole 55 of the air hole plate 54 set in the gas turbine combustor 9.

One fuel nozzle 56 included the main multi-coaxial-injection-hole burner 53 and the air hole plate 54 in which one air hole 55 is formed are arranged between the fuel nozzle 56 and the combustion chamber 1. The combustion air 12 is drawn into the upstream side of the air hole plate 54. The fuel nozzle 56 is arranged coaxially with the air hole 55 on the upstream side of the air hole 55 formed in the air hole plate 54 and is configured such that the coal gasified fuel 22 blown out from the fuel nozzle 56 flows into a center of the air hole 55.

The combustion air 12 supplied from the upstream side of the air hole plate 54 also flows into the air hole 55 of the air hole plate 54 from an outer circumferential side of the fuel nozzle 56. At this point, the combustion air 12 flows into the air hole 55 in a narrow space formed in the air hole plate 54 from a wide space formed on the upstream side of the air hole plate 54.

Therefore, on an inside of the air hole 55, a coaxial injection of a fuel flow and an annular air flow formed on an outer circumferential side of the fuel flow flowing down while including a fine turbulence structure such as a trailing vortex caused downstream of the fuel nozzle 56 and a peeling vortex due to sudden contraction of the combustion air 12 at the air hole entrance is formed.

The fuel flow and the air flow passed through the air hole 55 of the air hole plate 54 blows out to the combustion chamber 1 in a space wider than the air hole 55 at a time. The fuel flow and the air flow are quickly mixed in the combustion chamber 1 as a vortex limited in the narrow space of the air hole 55 expands and collapses.

In this way, when the plural air holes 55 coaxial with the plural fuel nozzles 56 are arranged on the air hole plate 54 and the fuel nozzles 56 are arranged on the upstream side of the air holes 55, the fuel flowing into the combustion chamber 1 is quickly dispersed. Therefore, a degree of mixing of the fuel and the air increases and the fuel and the air can be quickly mixed at a short distance.

In the main multi-coaxial-injection-hole burner 53 of the gas turbine combustor 9 having the configuration explained above, the fuel flow flows a center on the inside of the air hole 55 included in the coaxial injection burner and the air flow flows around the fuel flow. Therefore, the air fuel mixture is not formed in the combustible range very close to the fuel nozzle 56. Since the mixing progresses in an extremely narrow area immediately after the fuel flows into the inside of the air hole 55 and the combustion chamber 1, a flame less easily approaches the air the air hole plate 54. The gas turbine combustor 9 has a characteristic that reliability is high.

One of the five main multi-coaxial-injection-hole burners 53 set in the gas turbine combustor 9 according to this embodiment is extracted and a state of flows of the fuel flow and the airflow is explained with reference to Fig. 8.

In Fig. 8, in a positional relation between the fuel nozzles 56 and the air holes 55 included in the coaxial injection burners of the main multi-coaxial-injection-hole burner 53 set in the gas turbine combustor 9 according to this embodiment, center axes of burner innermost circumferential air holes 55-1 serving as a first coaxial injection burner sections 53a set on an inner circumferential side of the main multi-coaxial-injection-hole burner 53 tilt in a circumferential direction of a pitch circle, on which the air holes are arranged, with respect to the burner center axis.

Therefore, a fuel flow 4-1 and an air flow of inner circumferential fuel blowing out from the innermost circumferential air holes 55-1 serving as the first coaxial injection burner sections 53a are injected to the combustion chamber 1 along center axes of the innermost circumferential air holes 55-1 and quickly mixed by the mechanism explained above and changes to an air fuel mixture 42-1.

The innermost circumferential air holes 55-1 serving as the first coaxial injection burner sections 53a have a turning angle tilting in the circumferential direction. Therefore, the air fuel mixture 42-1 injected from the innermost circumferential air holes 55-1 changes to a turning flow 46 that flows to the downstream side while turning in a spiral shape on the inside of the combustion chamber 1. The air fuel mixture 42-1 flows out to the downstream side while expanding a turning radius on the inside of the combustion chamber 1.

The turning flow flowing down while expanding in this way induces a pressure gradient in an opposite direction on a center axis of the turn. Therefore, as shown in Fig. 8, a part of a combustion gas 44 generated by a reaction in the flame 45 in the turning flow circulates toward a stagnation area 49 caused near a burner center 60 as a circulating gas 43 and gives activation energy to the air fuel mixture 42-1, which flows in from the innermost circumferential air holes 55-1, to thereby function as an ignition source that maintains a combustion reaction. Consequently, the stable conical steady flame 45 is formed on the inside of the combustion chamber 1.

It is also effective in securing reliability to tilt the center axes of the air holes 55-1 to a center axis side from the tangential direction of a pitch circle diameter 61-1 define by an air hole inlet with respect to the innermost circumferential air holes 55-1, to which a turn is given, to give an inward tilt angle $\psi1$ to the air fuel mixture 42-1 such that the air fuel mixture 42-1 blows out tilting to a center side of the combustion chamber 1. The air fuel mixture 42-1 of the fuel and the air, to which the inward tilt angle $\psi1$ is given in addition to a turning angle $\theta1$, blowing out from the (innermost circumferential) air holes 55-1 in the first row serving as the first coaxial injection burner sections 53a turns in a spiral shape while approaching each other to a specific position defined by the turning angle $\theta1$, the inward tilt angle $\psi1$, and the pitch circle diameter 61-1 and reduces toward the axis direction of the combustion chamber 1. Therefore, a position where the air fuel mixture 42-1 flows down while expanding a turning radius is further on the downstream side from the air hole plate 54 and a distance between the structure and a flame increases. Therefore, reliability is improved.

On the other hand, outer circumferential side air holes 55-2 serving as the second coaxial injection burner sections 53b set on an outer circumferential side of the first coaxial injection burner sections 53a are arranged on the outer circumferential side of the main multi-coaxial-injection-hole burner 53. Air hole center axes of the outer circumferential side air holes 55-2 are parallel to the burner center axis. Therefore, a fuel flow 41-2 and an air flow of outer circumferential fuel blowing out from the outer circumferential side air holes 55-2 serving as the second coaxial injection burner sections 53b are injected to the combustion chamber 1 in parallel to the burner center axis and quickly mixed by the mechanism explained above and changes to an air fuel mixture 42-2. The air fuel mixture 42-2 flows straight in the combustion chamber 1 and merges with the flame 45 that spreads in a conical shape.

In a position of the merging, the air fuel mixture 42-2 starts a combustion reaction with activation energy given from the combustion gas 44 generated by combustion of the air fuel mixture 42-1 blowing out from the innermost circumferential air holes 55-1 serving as the first coaxial injection burner sections 53a. The flame 45 is propagated to an inside of the air fuel mixture 42-2.

In this way, the combustion gas 44 generated by the combustion reaction of the air fuel mixture 42-1 from the innermost circumferential air holes 55-1 is an ignition source for the air fuel mixture 42-2 from the outer circumferential air holes 55-2 serving as the second coaxial injection burner sections 53b. Therefore, a start position of the combustion reaction is on the downstream side from the air hole plate 54. The air fuel mixture 42-2 is burned in a further mixed state. Therefore, more uniform low NOx combustion is possible.

In this embodiment, the outer circumferential side air holes are formed only in one row. However, when the burner is applied to a gas turbine having a larger combustion amount, it is effective for performing low NOx combustion to include third and fourth air hole rows further on the outer side of the air holes. If a turning angle $\theta2$ is given to the outer circumferential side air holes 55-2, it is possible to intensity an opposite pressure gradient induced by a turning flow and improve the flame holding ability of the entire burner. If an inward tilt angle $\psi2$ is given after the turning angle $\theta2$ is given, as in the case of the innermost circumferential air holes 55-1, a combustor having high reliability and combustion stability can be obtained.

The air hole plate 54 on which the main multi-coaxial-injection-hole burners 53 and the pilot burner 50 in the gas turbine combustor 9 according to this embodiment are formed is shown in Figs. 3 to 5.

Fig. 5 is a diagram of the air hole plate 54 viewed from the combustion chamber 1 side. Fig. 3 is a sectional view of one of the main multi-coaxial-injection-hole burners 53 surrounded by broken lines on the air hole plate 54 shown in Fig. 5 taken along in the vertical direction with respect to a combustion nozzle side plate surface. Fig. 4 is a diagram of extracted one main multi-coaxial-injection-hole burner 53 of attention among the main multi-coaxial-injection-hole burners 53 surrounded by the broken lines on the air hole plate 54 shown in Fig. 5.

In Fig. 5, the position of the combustor liner 3 located on the downstream outer side of the air hole plate 54 on the fuel nozzle side is indicated by a broken line.

In Figs. 3 to 5, the plural air holes 55 corresponding to the pilot burner 50 are annularly provided in a portion surrounded by a broken line in a center of the air hole plate 54.

A turning angle is given to the air holes 55 of the pilot burner 50 such that an air fuel mixture of the fuel and the air blowing out from the air holes 55 turns counterclockwise viewed from the combustion chamber 1 side. A turning angle $\theta$ given to the air holes 55 is defined as an angle formed by center axes of the air holes 55 with respect to a center axis of the pilot burner 50.

In the gas turbine combustor 9 according to this embodiment, the five main multi-coaxial-injection-hole burners 53 are provided on the outer circumference of the pilot burner 50. In the air hole plate 54, in positions corresponding to the plural fuel nozzles 56 included in each of the main multi-coaxial-injection-hole burner 53, the plural air holes 55-1 on an inner circumferential side and the plural air holes 55-2 on an outer circumferential side are respectively annularly provided.

When attention is paid to one of the main multi-coaxial-injection-hole burners 53 surrounded by the broken lines on the air hole plate 54, the air holes 55 of the main multi-coaxial-injection-hole burner 53 includes air hole groups in two rows having the same pitch circle, i.e., air holes 55-1 included in the first coaxial injection burner sections 53a and air holes 55-2 included in the second coaxial injection burner sections 53b.

As shown in Figs. 3 and 4, among the air holes 55 formed in the air hole plate 54, in a first row (innermost circumference) included in the first coaxial injection burner sections 53a set on the inner circumferential side of the main multi-coaxial-injection-hole burner 53, five first row (innermost circumferential) air holes 55-1 having circular sections having an air hole diameter 62-1 are arranged on the circumference having a pitch circle diameter 61-1.

As shown in Fig. 8, the turning angle $\theta$ is given to the first row (innermost circumferential) air holes 55-1 included in the first coaxial injection burner sections 53a such that the air fuel mixture 42-1 of the fuel and the air blowing out from the air holes turns counterclockwise viewed from the combustion chamber 1 side.

Therefore, the innermost circumferential air holes 55-1 applied with the turning have a circular section but look elliptical because the center axes of the air holes 55-1 tilt with respect to the normal of the air hole plate 54.

It is also effective in securing reliability to tilt the center axes of the innermost circumferential air holes 55-1 from the tangential direction to a center axis side of the pitch circle diameter 61-1 defined by the air hole inlet as explained above to give the inward tilt angle $\psi 1$ such that the air fuel mixture 42-1 blows out tilting to the center side of the combustion chamber 1.

On the outer circumference of the first row (innermost circumferential) air holes 55-1 included in the first coaxial injection burner sections 53a, ten second row (outer circumferential side) air holes 55-2 having a circular section having an air hole diameter 62-2 are arranged on the circumference having a pitch circle diameter 61-2 included in the second coaxial injection burner sections 53b set on the outer circumferential side of the main multi-coaxial-injection-hole burner 53.

When the burner is applied to the gas turbine having a large combustion amount as explained above, it is effective in performing low NOx combustion to form third and fourth air hole rows further on an outer side of the air holes.

A turn is not applied to the second row (outer circumferential side) air holes 55-2 included in the second coaxial injection burner sections 53b as explained above. The second row (outer circumferential side) air holes 55-2 are air holes parallel to the burner center axis. For example, when a hydrogen concentration fluctuation range in fuel is large, if the turning angle $\theta 2$ is given to the outer circumferential side air holes 55-2 as well, it is possible to intensify an opposite pressure gradient induced by a turning flow and improve the flame holding ability of the entire burner. If the inward tilt angle $\psi 1$ is given after the turning angle $\theta 2$ is given, as in the case of the innermost circumferential air holes 55-1, a combustor having high reliability and combustion stability can be obtained.

The air holes 55 formed in the air hole plate 54 shown in the gas turbine combustor 9 according to this embodiment are only air holes having a circular section. However, the air holes are also realized by a shape other than the circular shape (e.g., rectangular slots).

The flat structure is used for the air hole plate 54 shown in the gas turbine combustor 9 according to this embodiment. However, if a surface on a side of the air hole plate 54 facing the combustion chamber is formed in a concave shape recessed in a conical or circular truncated cone shape, structure having higher reliability can be obtained. Since an outlet surface of the air hole plate 54 tilts in a recessed shape, an angle formed by fluid blowing out from the air holes 55-1 in the first row and the air holes 55-2 in the second row and the surface of the structure is steep and a large free space cannot be secured in the normal direction of the structure surface. Therefore, a trailing vortex caused around the air holes, in particular, on the outer circumferential side of the air holes is extremely small. If an air fuel mixture in the combustible range enters a low-flow rate area present in the trailing vortex caused around the air holes, in particular, on the outer circumferential side of the air holes, this causes flame approach to the structure. Therefore, the outlet surface of the air hole plate 54 may be formed in a shape recessed in a conical or circular truncated cone shape.

Conversely, if the surface on the side of the air hole plate 54 facing the combustion chamber is formed in a convex shape projecting in a conical or circular truncated cone shape, structure having higher reliability can be obtained. As in the case of the concave shape recessed in the circular truncated cone shape, since the outlet surface of the air hole plate 54 tilts, an angle formed by fluid blowing out from the air holes 55 and the surface of the structure is steep and a large free space cannot be secured in the normal direction of the structure surface. Therefore, a trailing vortex caused around the air holes is extremely small. Moreover, when the outlet surface of the air hole plate 54 has a shape projecting to the combustion chamber 1 side, since an engulfing flow of the ambient air flows on the air hole plate 54 toward a center of the main multi-coaxial-injection-hole burner 53 and washes away the fluid around the air holes to the center of the main multi-coaxial-injection-hole burner 53, a low-flow rate area is hardly present near the air holes and an air fuel mixture in the combustible range is not held up. Therefore, the effect of preventing flame from approaching the structure is larger compared with that in the case of the concave shape recessed in the circular truncated cone shape. Further, since the surface of the air hole plate 54 is covered with the engulfing flow, it is possible to prevent local overheat and obtain the structure of the main multi-coaxial-injection-hole burner 53 having high reliability.

In the gas turbine combustor 9 according to this embodiment, in each of the axial injection burners included in the plural main multi-coaxial-injection-hole burner 53 has a configuration of the air holes in which the diameter of the air holes 55-1 of the first coaxial injection burner sections 53a set on the inner circumferential side is smaller than the diameter of the air holes 55-2 of the second coaxial injection burner sections 53b set on the outer circumferential side.

In other words, the diameter 62-1 of the innermost circumferential air holes 55-1 serving as the first coaxial injection burner sections 53a of the main multi-coaxial-injection-hole burner 53 is smaller than the diameter 62-2 of the outer circumferential side air holes 55-2 serving as the second coaxial injection burner sections 53b.

To show the actions and the effects by the gas turbine combustor according to this embodiment to the maximum, it is desirable that a ratio of the diameter 62-1 of the innermost circumferential air holes 55-1 included in the first coaxial injection burner sections 53a set on the inner circumferential side of the main multi-coaxial-injection-hole burner 53 to the diameter 62-2 of the outer circumferential side air holes 55-2 included in the second coaxial injection burner sections 53b set on the outer circumferential side of the main multi-coaxial-injection-hole burner 53 is a ratio near a value represented by Expression (2).

When the diameter 62-1 of the innermost circumferential air holes 55-1 is represented as $D_1$, the number of the innermost circumferential air holes 55-1 is represented as $N_1$, the diameter 62-2 of the outer circumferential side air holes 55-2 is represented as $D_2$, and the number of the outer circumferential side air holes 55-2 is represented as $N_2$,

$$\frac{D_1}{D_2} \approx \sqrt{\frac{\left(\dfrac{N_2}{N_1}\right)^{\frac{\pi^2}{2e}}}{1+\left(\dfrac{N_2}{N_1}\right)^2}}$$

where, $\pi$ represents a number $\pi$ (3.141592:) and e represents a base (2.71828:) of a natural logarithm.

If a ratio of the diameter 62-1 of the innermost circumferential air holes 55-1 to the diameter 62-2 of the outer circumferential side air holes 55-2 is the ratio of Expression (2), it is possible to minimize influence of a change in a flow rate of fuel supplied to the fuel nozzles 56-1 corresponding to the innermost circumferential air holes 55-1 on NOx discharged from the entire burner while maximizing an effect of the change in the flow rate of the fluid supplied to the coaxially-disposed fuel nozzles 56-1 corresponding to the innermost circumferential air holes 55-1 on combustion stability and prevention of flame approach.

However, the ratio D1/D2 of the diameters of the air holes does not need to strictly coincide with Expression (2). A substantially same effect can be realized by changing a control constant even if the ratio slightly fluctuates because of convenience of processing or the like.

As explained above, when the burner is applied to the gas turbine having a large combustion amount, it is effective in performing low NOx combustion to form the third and fourth air hole rows further on an outer side of the outer circumferential side air holes. When the outer circumferential side air holes are set in plural rows, the diameter 62-1 of the first row (innermost circumferential side) air holes 55-1 serving as the first coaxial injection burner sections 53a is formed smaller than the diameter 62-2 of the second row (outer circumferential side) air holes 55-2 serving as the second coaxial injection burner sections 53b. The diameter 62-2 of the second row (outer circumferential side) air holes 55-2 serving as the second coaxial injection burner sections 53b is formed smaller than the diameter 62-3 in third row (outermost circumferential side) air holes 55-3 serving as third coaxial injection burner sections 53c. This makes it possible to realize a condition that the air fuel mixture 42-2 from the second row (outer circumferential side) air holes 55-2 has hydrogen concentration higher and combustion speed higher than those of the air fuel mixture 42-3 from the third row (outermost circumferential side) air holes 55-3.

With the structure explained above, when the combustion gas 44 generated by combustion of the air fuel mixture 42-1 from the innermost circumferential air holes 55-1 included in the main multi-coaxial-injection-hole burner 53 is used as an ignition source and flame is propagated to the air fuel mixture 42-2 on an outer circumferential side and the air fuel mixture 42-3 on the outermost circumferential side, it is possible to further increase flame propagation speed in the air fuel mixture 42-2 close to the combustion gas 44 of the air fuel mixture 42-1 from the first row air holes serving as an ignition source and propagation of a combustion reaction is surely performed. Therefore, stability of the flame is improved.

Because of the structural arrangement, a largest number of air holes can be arrayed in the outermost circumferential side air holes 55-3 included in the main multi-coaxial-injection-hole burner 53 provided in the gas turbine combustor 9 according to this embodiment. Therefore, if the air hole diameter 62-3 on the outermost circumferential side is formed largest, it is possible to secure a highest content of fuel that is burned under a fuel dilute condition. An effect for realization of low NOx combustion is also high.

It is desirable that the diameter ratio of the outer circumferential side air holes of the main multi-coaxial-injection-hole burner 53 provided in the gas turbine combustor 9 according to this embodiment for realizing the actions and effects explained above takes a value near the ratio specified by Expression (3) below.

When a diameter 62-i of air holes 55-i in an ith row from the innermost circumferential side to the outermost circumferential side is represented as $D_i$, the number of the air holes 55-i is represented as $N_i$, a diameter 62-(i+1) of air holes 55-(i+1) in a (i+1)th row on the outer circumferential side of the air holes 55-i is represented as $D_{(i+1)}$, and the number of the air holes 55-(i+1) is represented as $N_{i+1}$,

$$\frac{D_i}{D_{i+1}} \approx \sqrt{\frac{\pi \cdot \left(\frac{N_{i+1}}{N_i}\right)^{\frac{\pi^2}{2e}}}{e \cdot \left\{1 + \left(\frac{N_{i+1}}{N_i}\right)^2\right\}}}$$

where, $\pi$ represents a number $\pi$ (3.141592:), e represents a base (2.71828:) of a natural logarithm, and i represents an arbitrary natural number from 1 to 4.

When the diameter 62-(i+1) of the air holes 55-(i+1) in the (i+1)th row on the outer circumferential side (i+1) is larger than the diameter 62-i of the air holes 55-i in the ith row on an inner circumference of the air holes 55-(i+1), an equivalent ratio of an air fuel mixture blowing out from the air holes 55-(i+1) is lower than an equivalent ratio of an air fuel mixture blowing out from the air holes 55-i in the ith row and the air fuel mixture blowing out from the air holes 55-(i+1) has combustion speed lower than that of the air fuel mixture blowing out from the air holes 55-i in the ith row. Therefore, a combustion reaction progresses further on the downstream side. A risk of flame approaching the air hole plate 54 when hydrogen concentration rises is lower.

However, when the diameter 62-(i+1) of the air holes 55-(i+1) in the (i+1)th row on the outer circumferential side is excessively larger than the diameter 62-i of the air holes 55-i in the ith row, mixing average temperature of a combustion gas generated by combustion of an air fuel mixture from the air holes 55-i in the ith row and the air fuel mixture blowing out from the air holes 55-(i+1) falls and hydrogen concentration of the air fuel mixture blowing out from the air holes 55-(i+1) falls. Therefore, it is likely that flame propagation is not smoothly performed.

If the diameter ratio of the outer circumferential side air holes is near the value of Expression (3), it is possible to realize, without excessively dropping the mixing average temperature of the combustion gas generated by combustion of the lair fuel mixture from the air holes 55-i in the ith row and the air fuel mixture blowing out from the air holes 55-(i+1), a flame form in which combustion speed further falls toward the outer circumferential side. Therefore, it is possible to prevent flame approach to the upstream side while securing smooth flame propagation.

However, the ratio of the air holes does not need to strictly coincide with Expression (3). A substantially same effect can be realized even if the ratio slightly fluctuates because of convenience of processing or the like.

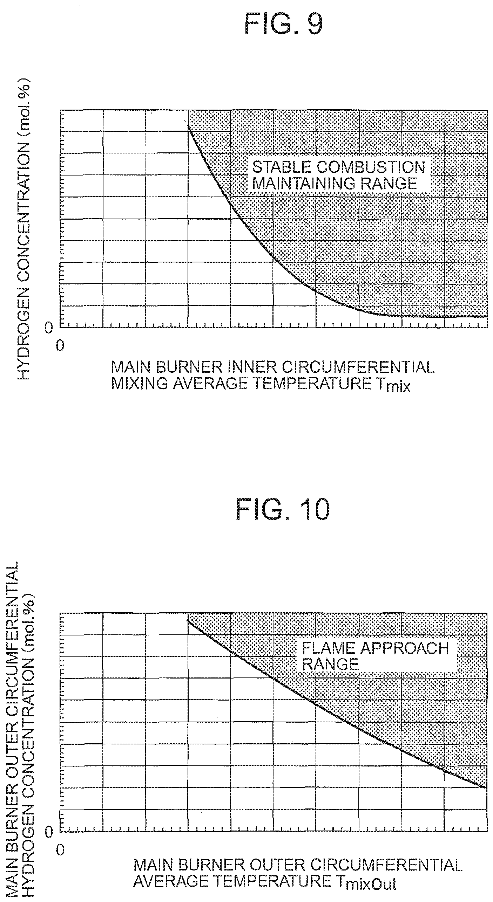

The actions and effects realized by adopting the gas turbine combustor according to this embodiment are explained with reference to Figs. 9 to 13.

Fig. 9 is a diagram in which conditions for maintaining stable flame are organized concerning one of the main burners set in the gas turbine combustor. As explained above, the innermost circumferential air holes 55-1 included in the first coaxial injection burner sections 53a of the multi-coaxial-injection-hole burner 53 related to the gas turbine combustor 9 according to this embodiment has the turning angle tilting in the circumferential direction. Therefore, as shown in Fig. 8, the air fuel mixture 42-1 injected from the innermost circumferential air holes 55-1 changes to the turning flow 46 flowing to the downstream side while turning in a spiral shape on the inside of the combustion chamber 1 and flows out to the downstream side while expanding the turning radius on the inside of the combustion chamber 1.

The turning flow 46 flowing down while expanding in this way induces a pressure gradient in an opposite direction on a center axis of the turn. Therefore, a part of the combustion gas 44 generated by a reaction in the flame 45 in the turning flow circulates toward the stagnation area 49 caused near the burner center 60 as the circulating gas 43 and gives activation energy to the air fuel mixture 42-1, which flows in from the innermost circumferential air holes 55-1, to thereby function as an ignition source that maintains a combustion reaction. Consequently, the stable conical steady flame 45 is formed on the inside of the combustion chamber 1.

Therefore, whether stable steady flame can be maintained in the main multi-coaxial-injection-hole burner 53 included in the gas turbine combustor 9 depends on whether the air fuel mixture 42-1 can stably start the combustion reaction with the activation energy given to the air fuel mixture 42-1 flowing in from the innermost circumferential air holes 55-1 by the circulating gas 43. To stable start the combustion reaction, it is necessary to secure hydrogen concentration in the air fuel mixture 42-1 at a level for causing ignition with respect to mixing average temperature Tmix at the time when the circulating gas 43 and the air fuel mixture 42-1 is mixed.

A range in which this condition is satisfied is equivalent to a stable combustion maintaining range indicated by hatching in Fig. 9. As explained above, in the CCS-IGCC plant including the gas turbine combustor 9 according to this embodiment, hydrogen concentration in the coal gasified fuel 22 substantially changes. Therefore, under a low hydrogen concentration condition in which a carbon dioxide collection ratio is low, it is necessary to blow out a larger amount of a main burner inner circumferential fuel 41-1 from the fuel nozzles 56 of the first coaxial injection burner sections 53a. Conversely, under a high-hydrogen concentration condition in which the carbon dioxide collection ratio is high, the inner circumferential fuel 41-1 can be reduced.

On the other hand, conditions for not causing flame approach in the main multi-coaxial-injection-hole burner 53 are organized and shown in Fig. 10. As shown in Fig. 8, the air fuel mixture 42-2 blowing out from the outer circumferential side air holes 55-2 flows straight in the combustion chamber 1 and merges with the flame 45 that spreads in a conical shape.

In a position of the merging, the air fuel mixture 42-2 starts a combustion reaction with activation energy given from the combustion gas 44 generated by combustion of the air fuel mixture 42-1 blowing out from the innermost circumferential air holes 55-1. The flame 45 is propagated to the inside of the air fuel mixture 42-2.

At this point, when hydrogen concentration in the air fuel mixture 42-2 exceeds certain concentration with respect to mixing average temperature TmixOut of the combustion gas 44 generated by the combustion of the inner circumferential side air fuel mixture 42-1 and the air fuel mixture 42-2 from the outer circumferential side air holes 55-2, there is a risk that combustion speed of flame propagated in an air fuel mixture is excessively large with respect to flow velocity of the air fuel mixture and the flame approaches the air hole plate 54 on the upstream side. A range of such a condition is shown by hatching as a flame approach range in Fig. 10.

In the gas turbine combustor 9 according to this embodiment, to deal with fluctuation in hydrogen concentration in a wide load range, maintain combustion stability, and realize low NOx combustion while performing highly-reliable combustion, it is necessary to limit the air fuel mixture 42-2 on the outer circumference blowing out from the second coaxial injection burner sections 53b included in the main multi-coaxial-injection-hole burner 53 to the combustion chamber 1 not to reach hydrogen concentration in the flame approach range shown in Fig. 10 and secure a large combustion amount on the outer circumferential side of the main multi-coaxial-injection-hole burner 53 as much as possible while securing hydrogen concentration in the stable combustion maintaining range shown in Fig. 9 concerning the air fuel mixture 42-1 on the inner circumference blowing out from the first coaxial injection burner sections 53a included in the main multi-coaxial-injection-hole burner 53 to the combustion chamber 1.

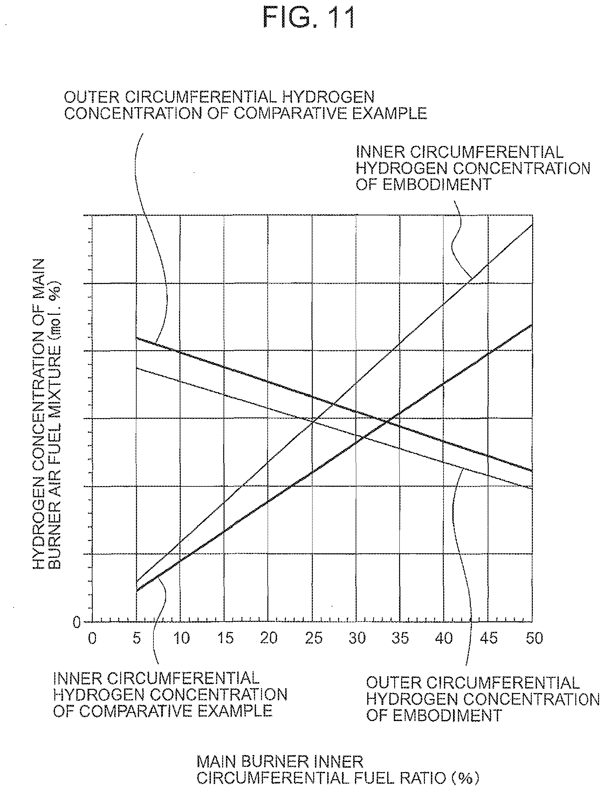

In Fig. 11, actions and effects by the main multi-coaxial-injection-hole burner 53 of the gas turbine combustor 9 according to the embodiment of the present invention are shown. In Fig. 11, a main burner inner circumferential fuel ratio of a gas turbine combustor is plotted on an abscissa and hydrogen concentration in an air fuel mixture is plotted on an ordinate with respect to the coal gasified fuel 22 having a certain composition.

The main burner inner circumferential ratio is a ratio obtained by dividing a fuel flow rate supplied to the fuel nozzles 56 corresponding to an innermost circumferential (first row) air hole group serving as the first coaxial injection burner sections 53a of the main multi-coaxial-injection-hole burner 53 by a fuel flow rate supplied to the entire main multi-coaxial-injection-hole burner 53.

On the other hand, as shown in Fig. 11, in a multi-coaxial-injection-hole burner having a uniform air hole diameter based on a technique of a gas turbine combustor according to a comparative example, hydrogen concentration of the inner circumferential air fuel mixture 42-1 rises at a fixed rate with respect to an increase in a main burner inner circumferential fuel ratio. Hydrogen concentration of the outer circumferential air fuel mixture 42-2 falls at a small rate compared with the inner circumference.

Tilts of the rise and the fall of the hydrogen concentration are different between the embodiment of the present invention and the comparative example because the number of air holes arranged in one row is larger on the outer circumferential side than the inner circumferential side.

In the air hole plate 54 included in the main multi-coaxial-injection-hole burner 53 in the gas turbine combustor according to the embodiment of the present invention, when the inner circumferential side air hole diameter 62-1 of the inner circumferential side air holes 55-1 included in the first coaxial injection burner sections 53a is formed smaller than the outer circumferential side air hole diameter 62-2 of the outer circumferential side air holes 55-2 included in the second coaxial injection burner sections 53b, hydrogen concentration of the inner circumferential side air fuel mixture 42-1 blowing out from the inner circumferential side air holes 55-1 rises at a rate larger than that in the technique of the comparative example with respect to an increase in the main burner inner circumferential fuel ratio and shifts to a high concentration side as a whole.

Hydrogen concentration of the outer circumferential air fuel mixture 42-2 blowing out from the outer circumferential side air holes 55-2 included in the second coaxial injection burner sections 53b of the main multi-coaxial-injection-hole burner 53 in the gas turbine combustor according to the embodiment of the present invention falls at a rate smaller than that in the technique of the comparative example with respect to an increase in a main burner inner circumferential fuel ratio and shifts to a low concentration side as a whole. This is because, since the diameter 62-1 of the innermost circumferential air holes 55-1 is set smaller than the diameter 62-2 of the outer circumferential side air holes 55-2, a flow rate of the combustion air 12 flowing into the innermost circumferential air holes 55-1 falls.

In other words, this is because a content of the air in an inner circumferential side air fuel mixture of the main multi-coaxial-injection-hole burner 53 falls, hydrogen concentration relatively rises, and an air content increases and hydrogen concentration relatively falls on the outer circumferential side of the main multi-coaxial-injection-hole burner 53.

Further, since a flow rate of the combustion air 12 flowing into the inner circumferential side of the main multi-coaxial-injection-hole burner 53 decreases, mixing average temperature Tmix at the time when the circulating gas 43 and the inner circumferential side air fuel mixture 42-1 are mixed rises. When the rise in the mixing average temperature Tmix is combined with the rise in the hydrogen concentration, a state of the inner circumferential air fuel mixture 42-1 of the main multi-coaxial-injection-hole burner 53 in the gas turbine combustor 9 according to this embodiment shift to an upper right side in Fig. 9.

Concerning the outer circumferential side of the main multi-coaxial-injection-hole burner 53, a flow rate of the inner circumferential side air fuel mixture 42-1 decreases and a flow rate of the outer circumferential side air fuel mixture 42-2 increases. Therefore, the mixing average temperature TmixOut of the combustion gas 44 generated by combustion of the inner circumferential side air fuel mixture 42-1 and the air fuel mixture 42-2 from the outer circumferential side air holes 55-2 falls because the combustion gas 44 as a heat source decreases and a low-temperature air fuel mixture before combustion increases.

Therefore, when the fall in the mixing average temperature TmixOut and the hydrogen concentration fall of the outer circumferential side air fuel mixture 42-2 are combined, a state of the outer circumferential side air fuel mixture 42-2 of the main multi-coaxial-injection-hole burner 53 in the gas turbine combustor according to the embodiment of the present invention shifts to a lower left side in an area shown in Fig. 10.

Consequently, if the structure of the main multi-coaxial-injection-hole burner 53 is adopted in the gas turbine combustor 9 according to the embodiment of the present invention, it is possible to maintain stable combustion at a lower main burner inner circumferential fuel ratio and suppress hydrogen concentration in the outer circumferential air fuel mixture 42-2 of the main multi-coaxial-injection-hole burner 53 to be low. Since the mixing average temperature TmixOut of the combustion gas 44 generated by combustion of the inner circumferential side air fuel mixture 42-1 of the main multi-coaxial-injection-hole burner 53 and the air fuel mixture 42-2 from the outer circumferential air holes 55-2 also falls, tolerance with respect to flame approach is expanded. Therefore, it is possible to maintain combustion stability in a wide range and perform highly-reliable combustion and it is possible to realize low NOx combustion.

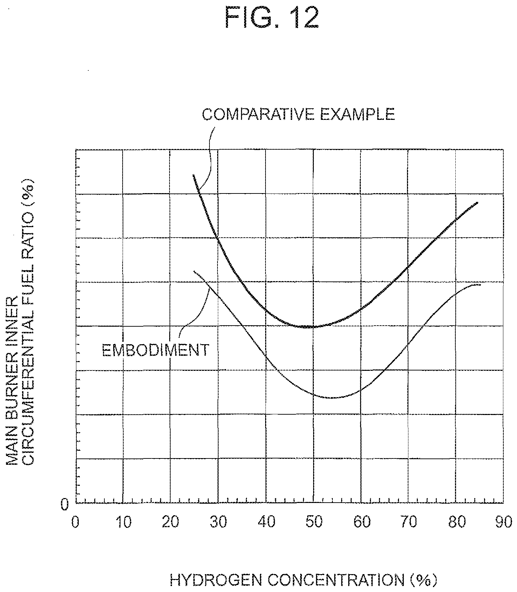

In Fig. 12, a change in a main burner inner circumferential fuel ratio in the gas turbine combustor 9 according to the embodiment of the present invention necessary for maintaining combustion stability with respect to a change in hydrogen concentration under a rated load (FSFL) condition and performing highly-reliable combustion is shown in comparison with the multi-coaxial-injection-hole burner having the uniform air hole diameter in the technique according to the comparative example.

Only the five air holes 55-1 are arranged on the innermost circumference of the main multi-coaxial-injection-hole burner 53 provided in the gas turbine combustor 9 as shown in Figs. 4 and 5. Therefore, if the main burner inner circumferential fuel ratio is increased, on the inner circumferential side, an equivalent ratio suddenly increases to be close to a stoichiometric mixture ratio and local flame temperature rises. Therefore, when the main burner inner circumferential fuel ratio is increased, NOx emitted from the entire main burner increases.

In the case of the multi-coaxial-injection-hole burner having the uniform air hole diameter based on the technique of the gas turbine combustor according to the comparative example, an inner circumferential fuel flow rate necessary for securing hydrogen concentration of an inner circumferential side air fuel mixture necessary for stable combustion maintenance decreases and a main burner inner circumferential fuel ratio decreases according to an increase in hydrogen concentration in fuel.

On the other hand, with the structure adopted in the main multi-coaxial-injection-hole burner 53 in the gas turbine combustor 9 according to the embodiment of the present invention, a diameter of the innermost circumferential air holes 55-1 serving as the first coaxial injection burner sections 53a is formed to be smaller than a diameter of the air holes 55-2 on the outer circumferential side serving as the second coaxial injection burner sections 53b. Therefore, as shown in Fig. 12, stable combustion can be maintained by a smaller main burner inner circumferential fuel ratio and a ratio of combustion at high temperature decreases. Therefore, since the burner shifts to an operation condition with a low inner circumferential burner fuel ratio as a whole, it is possible to realize low NOx combustion.

On the other hand, at high hydrogen concentration, the risk of flame approach on the outer circumferential side of the main burner explained with reference to Fig. 10 occurs. Therefore, hydrogen concentration of an air fuel mixture on the outer circumferential side of the main burner has to be suppressed according to necessity of preventing the risk of the flame approach. It is necessary to reduce fuel supplied to the outer circumferential side of the main burner and increase the main burner inner circumferential fuel ratio again.

With the structure adopted in the main multi-coaxial-injection-hole burner 53 having the structure explained above in the gas turbine combustor 9 according to this embodiment, it is possible to suppress hydrogen concentration in the outer circumferential air fuel mixture 42-2 blowing out from the outer circumferential side air holes 55-2 serving as the second coaxial injection burner sections 53b of the main multi-coaxial-injection-hole burner 53 to be low. The mixing average temperature TmixOut of the fuel gas 44 generated by combustion of the inner circumferential side air fuel mixture 42-1 blowing out from the inner circumferential side air holes 55-1 serving as the first coaxial injection burner section 53a of the main multi-coaxial-injection-hole burner 53 and the air fuel mixture 42-2 from the outer circumferential side air holes 55-2 also falls. Therefore, tolerance with respect to flame approach is expanded.

An operation range in which the main burner inner circumferential fuel ratio can be reduced is expanded to higher hydrogen concentration according to an increase in hydrogen concentration in fuel.

Further, to prevent a risk of flame approach on the outer circumferential side of the main burner, even after necessity for increasing the main burner inner circumferential fuel ratio occurs again, in the main multi-coaxial-injection-hole burner 53 of the gas turbine combustor 9 according to this embodiment, it is possible to suppress hydrogen concentration in the outer circumferential air fuel mixture 42-2 to be low as explained above. The mixing average temperature TmixOut of the fuel gas 44 generated by combustion of the inner circumferential side air fuel mixture 42-1 and the air fuel mixture 42-2 from the outer circumferential side air holes 55-2 also falls. Therefore, it is possible to suppress an inner circumferential fuel ratio to be lower than that in the technique of the comparative example. It is possible to maintain combustion stability in a wider range and realize low NOx combustion while performing highly-reliable combustion.

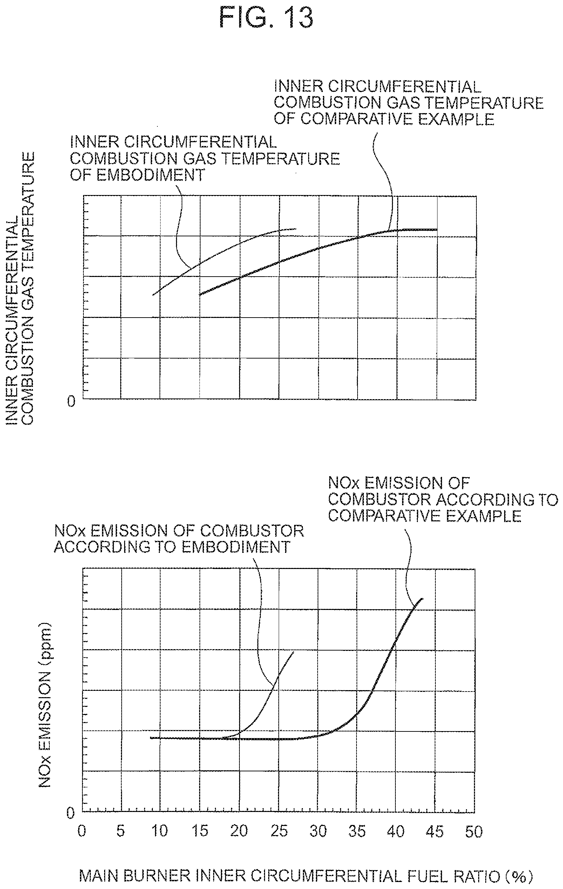

Actions and effects of low NOx combustion by the gas turbine combustor 9 according to the embodiment of the present invention are explained below with reference to Fig. 13.

In Fig. 13, changes in combustion gas temperature of the inner circumferential air fuel mixture 42-1 blowing out from the inner circumferential side air holes 55-1 serving as the first coaxial injection burner sections 53a included in the main multi-coaxial-injection-hole burner 53 according to this embodiment and emission of NOx emitted from the gas turbine combustor 9 at the time when a main burner inner circumferential fuel ratio is also changed in the gas turbine combustor with respect to the coal gasified fuel 22 having a certain composition are shown in comparison with those of the multi-coaxial-injection-hole burner having the uniform air hole diameter of the technique according to the comparative example.

As explained above, with the structure adopted in the main multi-coaxial-injection-hole burner 53 in the gas turbine combustor 9 according to the embodiment of the present invention, hydrogen concentration of the inner circumferential side air fuel mixture 42-1 rises at a lower main burner inner circumferential fuel ratio. Therefore, combustion gas temperature of the high-temperature inner circumferential air fuel mixture 42-1 is obtained by the lower main burner inner circumferential fuel ratio. As it is widely known, NOx emission increases strongly depending on size of an area of a local high-temperature portion.

Therefore, with the multi-coaxial-injection-hole burner 53 of the gas turbine combustor 9 according to the embodiment of the present invention, it is possible to maintain stable combustion at a lower main burner inner circumferential fuel ratio. Moreover, it is possible to suppress content of fuel burned at high temperature to be low even if high-temperature flame equivalent to that in the technique according to the comparative example is formed. Therefore, it is possible to drop the NOx emission finally emitted from the gas turbine combustor 9.

As explained above, if the structure of the multi-coaxial-injection-hole burner 53 of the gas turbine combustor 9 according to this embodiment is adopted, it is possible to maintain stable combustion at a lower main burner inner circumferential fuel ratio and suppress hydrogen concentration in the outer circumferential air fuel mixture 42-2 to be low. Since the mixing average temperature TmixOut of the combustion gas 44 generated by combustion of the inner circumferential side air fuel mixture 42-1 and the air fuel mixture 42-2 from the outer circumferential side air holes 55-2 also falls. Therefore, tolerance with respect to flame approach is expanded. It is possible to maintain combustion stability in a wider range and realize low NOx combustion while performing highly-reliable combustion.

When an existing gas turbine combustor is the gas turbine combustor employing the multi-coaxial-injection-hole burner according to the comparative example, the air hole plate 54 is replaced with the air hole plate 54 in which the air holes 55 included in the main multi-coaxial-injection-hole burner 53 of the gas turbine combustor according to this embodiment. This makes it possible to remodel the gas turbine combustor into a gas turbine combustor that can maintain combustion stability in a wide range, perform highly-reliable combustion, and realize low NOx combustion.

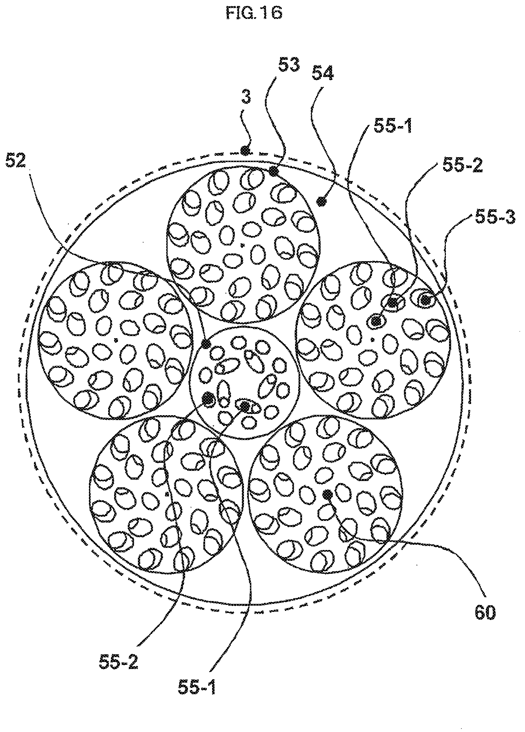

The air hole plate 54 on which the main multi-coaxial-injection-hole burners 53 and the pilot burner 52 in the gas turbine combustor 9 according to a modified embodiment are formed is shown in Figs. 14 to 16. In particular, Fig. 16 is a diagram of the air hole plate 54 viewed from the combustion chamber 1 side according to a modified embodiment compared with the embodiment of Fig. 5. Same reference numerals are used for similar features and the above-description applies for similar features while the below description focuses mainly on differences.

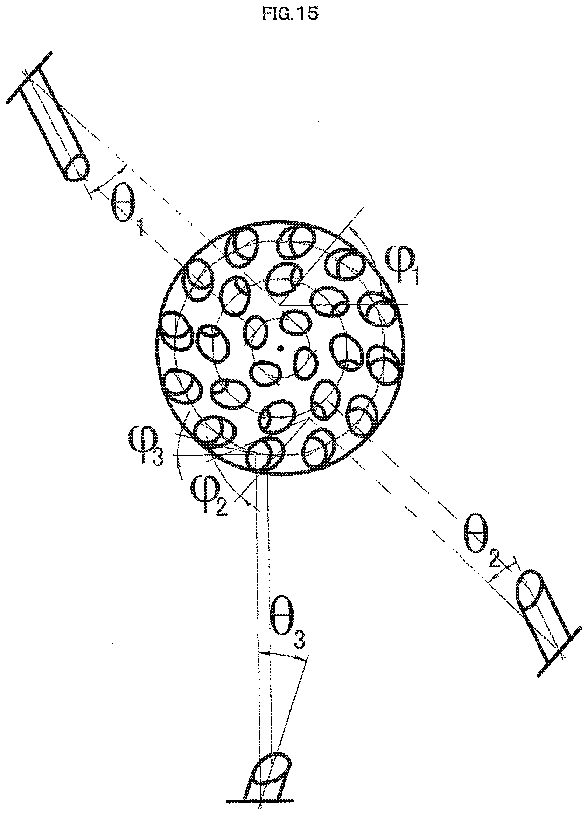

Fig. 14 is a sectional view of one of the main multi-coaxial-injection-hole burners 53 on the air hole plate 54 shown in Fig. 16 taken along in the vertical direction with respect to a combustion nozzle side plate surface. Fig. 15 is a diagram of extracted one main multi-coaxial-injection-hole burner 53 of attention among the main multi-coaxial-injection-hole burners 53 on the air hole plate 54 shown in Fig. 16.

In Fig. 16, the position of the combustor liner 3 located on the downstream outer side of the air hole plate 54 on the fuel nozzle side is indicated by a broken line.

In Figs. 14 to 16, the plural air holes 55 corresponding to the pilot burner 52 are annularly provided in a portion in a center of the air hole plate 54.

A turning angle is given to the air holes 55 of the pilot burner 50 such that an air fuel mixture of the fuel and the air blowing out from the air holes 55 turns counterclockwise viewed from the combustion chamber 1 side. A turning angle $\theta$ (in particular $\theta i$ in an i-th row of circularly provided air holes 55-i which may be provided such as to surround an i-1 th row of circularly provided air holes 55-(i-1) and/or which may be provided such as to be surrounded by an i+1 th row of circularly provided air holes 55-(i+1)) given to the air holes 55 is defined as an angle formed by center axes of the air holes 55 with respect to a center axis of the pilot burner 50.

In the gas turbine combustor 9 according to this embodiment, the five main multi-coaxial-injection-hole burners 53 are provided on the outer circumference of the pilot burner 52. In the air hole plate 54, in positions corresponding to the plural fuel nozzles 56 included in each of the main multi-coaxial-injection-hole burner 53, the plural air holes 55-1 on an inner circumferential side and the plural air holes 55-2 and 55-3 on an outer circumferential side are respectively annularly provided (the plural air holes 55-2 surrounding in a circular row the plural air holes 55-1, the plural air holes 55-3 surrounding in a circular row the plural air holes 55-2; cf. Fig. 16).

When attention is paid to one of the main multi-coaxial-injection-hole burners 53, the air holes 55 of the main multi-coaxial-injection-hole burner 53 includes air hole groups in three rows.

As shown in Figs. 14 and 15, among the air holes 55 formed in the air hole plate 54, in a first row (innermost circumference) of air holes 55-1 on the inner circumferential side of the main multi-coaxial-injection-hole burner 53, four first row (innermost circumferential) air holes 55-1 having circular sections having an air hole diameter 62-1 are arranged on the circumference having a pitch circle diameter 61-1. Moreover, among the air holes 55 formed in the air hole plate 54, in a second row (middle circumference) of air holes 55-2 on the middle circumferential portion of the main multi-coaxial-injection-hole burner 53, eight second row air holes 55-2 having circular sections having an air hole diameter 62-2 are arranged on the circumference having a pitch circle diameter 61-2. Among the air holes 55 formed in the air hole plate 54, in a third row (outermost circumference) of air holes 55-3 on the outer circumferential side of the main multi-coaxial-injection-hole burner 53, twelve third row (outermost circumferential) air holes 55-3 having circular sections having an air hole diameter 62-3 are arranged on the circumference having a pitch circle diameter 61-3.

As shown in Fig. 14, as derivable form the schematic cross section of the multi-coaxial-injection-hole burner 53 in the air plate 54 of this modified embodiment, the portions of the air plate 54 forming a multi-coaxial-injection-hole burner 53 substantially has a cone shape.

As shown in Fig. 15, the turning angles $\theta 1$ and $\varphi 1$ are given to the first row (innermost circumferential) air holes 55-1 such that the air fuel mixture 42-1 of the fuel and the air blowing out from the air holes turns counterclockwise viewed from the combustion chamber 1 side. Therefore, the innermost circumferential air holes 55-1 applied with the turning have a circular section but look elliptical because the center axes of the air holes 55-1 tilt with respect to the normal of the air hole plate 54.

The turning angles $\theta 2$ and $\varphi 2$ are given to the second row (middle circumferential) air holes 55-2 such that the air fuel mixture 42-2 of the fuel and the air blowing out from the air holes turns counterclockwise viewed from the combustion chamber 1 side. Therefore, the innermost circumferential air holes 55-2 applied with the turning have a circular section but look elliptical because the center axes of the air holes 55-2 tilt with respect to the normal of the air hole plate 54.

The turning angles $\theta 3$ and $\varphi 3$ are given to the third row (outermost circumferential) air holes 55-3 such that the air fuel mixture 42-3 of the fuel and the air blowing out from the air holes turns counterclockwise viewed from the combustion chamber 1 side. Therefore, the innermost circumferential air holes 55-3 applied with the turning have a circular section but look elliptical because the center axes of the air holes 55-3 tilt with respect to the normal of the air hole plate 54.

Here, the angles $\theta i$ indicate a tilt of the central axis with respect to the axis perpendicular to the central plane of the air hole plate 54 (i.e. with respect to the normal of the air hole plate 54) and the angles $\varphi i$ indicate a tilt angle between a central axis (or rather a projection of the central axis to the central plane of the air plate 54) and a tangential line to the imaginary circular line along which the air holes of the i-th row are provided. As can be seen in Fig. 15, preferably $\varphi 1 > \varphi 2 > \varphi 3$.

As shown in Fig. 14, in the cross-sectional view, according to the angles $\theta i$ and $\varphi i$ the central axis of the air holes 55-1 of the innermost row is tilted with respect to the central axis of the cone shaped multi-coaxial-injection-hole burner 53 at an angle $\beta$. Also the air holes 55-2 and 55-3 have a tilt angle between the central axes of the air holes and the central axis of the cone shaped multi-coaxial-injection-hole burner 53, wherein the tilt angle decreases towards the outer portions so that the outermost row of the air holes has the lowest tilt angle in Fig. 14.

In particular, Fig. 14 shows an embodiment of a gas turbine combustor for combusting a gasified fuel including hydrogen as its component, comprising a plurality of multi-coaxial-injection-hole burners, each of which burners includes a plurality of fuel nozzles and an air plate including a plurality of air-apertures for the respective fuel nozzles, wherein the air plate includes a protrusion of one of a cone-shape and truncated-cone-shape protruding at an outlet side of the air plate from which outlet side a mixture of the fuel and an air discharged, and in each of the multi-coaxial-injection-hole burners, a first part of the fuel nozzles arranged circumferentially and a first part of the air-apertures arranged circumferentially are arranged coaxially so that the fuel nozzles of the first part are for the respective air-apertures of the first part to form a first part of the multi-coaxial-injection-hole burner surrounding the protrusion, a second part of the fuel nozzles arranged circumferentially and a second part of the air-apertures arranged circumferentially are arranged coaxially so that the fuel nozzles of the second part are for the respective air-apertures of the second part to form a second part of the multi-coaxial-injection-hole burner surrounding coaxially the first part of the multi-coaxial-injection-hole burner, a third part of the fuel nozzles arranged circumferentially and a third part of the air-apertures arranged circumferentially are arranged coaxially so that the fuel nozzles of the third part are for the respective air-apertures of the third part to form a third part of the multi-coaxial-injection-hole burner surrounding coaxially the second part of the multi-coaxial-injection-hole burner, a cross-sectional area of each of the air-apertures in the first part of the multi-coaxial-injection-hole burner is smaller than a cross-sectional area of each of the air-apertures in the second part of the multi-coaxial-injection-hole burner, and a cross-sectional area of each of the air-apertures in the second part of the multi-coaxial-injection-hole burner is smaller than a cross-sectional area of each of the air-apertures in the third part of the multi-coaxial-injection-hole burner, so that the first part of the multi-coaxial-injection-hole burner keeps a flame of the gas turbine combustor and the second and third parts of the multi-coaxial-injection-hole burner performs low NOx combustion. According to the preferred embodiment, the air-apertures arranged circumferentially are distributed along an imaginary circumferential line, and a central axis of each of the air-apertures arranged circumferentially extends in a respective tangential direction of the imaginary circumferential line. According to the preferred embodiment, the central axis of each of the air-apertures arranged circumferentially extends in a respective radial direction of the imaginary circumferential line to urge the air radially inward.

Figs. 15 and 16 show an embodiment of a gas turbine combustor for combusting a gasified fuel including hydrogen as its component, comprising a plurality of multi-coaxial-injection-hole burners 53, each of which burners 53 includes a plurality of fuel nozzles 56 and an air plate 54 including a plurality of air-apertures 55 for the respective fuel nozzles, wherein in each of the multi-coaxial-injection-hole burners, a first part of the fuel nozzles arranged circumferentially and a first part 55-1 of the air-apertures arranged circumferentially are arranged coaxially so that the fuel nozzles of the first part are for the respective air-apertures of the first part to form a first part 53a of the multi-coaxial-injection-hole burner, a second part of the fuel nozzles arranged circumferentially and a second part 55-2 of the air-apertures arranged circumferentially are arranged coaxially so that the fuel nozzles of the second part are for the respective air-apertures of the second part to form a second part 53b of the multi-coaxial-injection-hole burner surrounding coaxially the first part of the multi-coaxial-injection-hole burner, and a cross-sectional area of each of the air-apertures in the first part 53a of the multi-coaxial-injection-hole burner is smaller than a cross-sectional area of each of the air-apertures in the second part 53b of the multi-coaxial-injection-hole burner, so that the first part 53a of the multi-coaxial-injection-hole burner keeps a flame of the gas turbine combustor and the second part 53b of the multi-coaxial-injection-hole burner performs low NOx combustion. By means of the circular three rows of air holes, this forms an embodiment in which there is a third part of the multi-coaxial-injection-hole burner. Here, particularly, the row of air holes 55-3 form an embodiment of the features that a third part of the fuel nozzles arranged circumferentially and a third part of the air-apertures arranged circumferentially are arranged coaxially so that the fuel nozzles of the third part are for the respective air-apertures of the third part to form a third part of the multi-coaxial-injection-hole burner surrounding coaxially the second part of the multi-coaxial-injection-hole burner, so that the first part of the multi-coaxial-injection-hole burner keeps the flame of the gas turbine combustor and the second and third parts of the multi-coaxial-injection-hole burner perform the low NOx combustion.

Moreover, Figs. 15 and 16 show an embodiment of the features that the air-apertures of each of the $i_{th}$ row and the $(i+1)_{th}$ row arranged circumferentially are distributed along an imaginary circumferential line, and a central axis of each of the air-apertures of each of the $i_{th}$ row and the $(i+1)_{th}$ row extends in a respective tangential direction of the imaginary circumferential line and the central axis of each of the air-apertures of each of the $i_{th}$ row and the $(i+1)_{th}$ row extends in a respective radial direction of the imaginary circumferential line to urge the air radially inward.

The present invention can be applied to a gas turbine combustor that uses fuel in which hydrogen concentration included therein fluctuates.

**Claims**

1.  A gas turbine combustor (9) for combusting a gasified fuel including hydrogen as its component, comprising a plurality of multi-coaxial-injection-hole burners (53), each of which burners (53) includes a plurality of fuel nozzles (56) and an air plate (54) including a plurality of air-apertures (55) for the respective fuel nozzles (56), wherein in each of the multi-coaxial-injection-hole burners (53), a first part of the fuel nozzles (56) arranged circumferentially and a first part (55-1) of the air-apertures (55) arranged circumferentially are arranged coaxially so that the fuel nozzles(56) of the first part are for the respective air-apertures (55) of the first part (55-1) to form a first part (53a) of the multi-coaxial-injection-hole burner (53), a second part of the fuel nozzles (56) arranged circumferentially and a second part (55-2) of the air-apertures (55) arranged circumferentially are arranged coaxially so that the fuel nozzles (56) of the second part are for the respective air-apertures (55) of the second part to form a second part (53b) of the multi-coaxial-injection-hole burner (53) surrounding coaxially the first part (53a) of the multi-coaxial-injection-hole burner (53), a cross-sectional area of each of the air-apertures (55) in the first part (53a) of the multi-coaxial-injection-hole burner (53) is smaller than a cross-sectional area of each of the air-apertures (55) in the second part (53b) of the multi-coaxial-injection-hole burner (53), so that the first part (53a) of the multi-coaxial-injection-hole burner (53) keeps a flame of the gas turbine combustor (9) and the second part (53b) of the multi-coaxial-injection-hole burner (53) performs low NOx combustion, and the plurality of air-apertures (55) are respectively arranged in the circumferential direction in the air plate (54) and form a row of the air-apertures (55), **characterized in that** the plurality of air-apertures (55) have a same diameter in unit of row, wherein when the diameter of each of the air-apertures (55) in the first part (53a) of the multi-coaxial-injection-hole burner (53) is $D_1$, a total number of the air-apertures (55) in the first part (53a) of the multi-coaxial-injection-hole burner (53) is $N_1$, the diameter of each of the air-apertures (55) in the second part of the multi-coaxial-injection-hole burner (53) is $D_2$, a total number of the air-apertures (55) in the second part of the multi-coaxial-injection-hole burner (53) is $N_2$, and a base of natural logarithm is e, the following formula

$$\frac{D_1}{D_2} = \sqrt{\frac{\left(\frac{N_2}{N_1}\right)^{\frac{\pi^2}{2e}}}{1+\left(\frac{N_2}{N_1}\right)^2}}$$

    is satisfied.

2.  The gas turbine combustor (9) according to claim 1, wherein a third part of the fuel nozzles (56) arranged circumferentially and a third part of the air-apertures (55) arranged circumferentially are arranged coaxially so that the fuel nozzles (56) of the third part are for the respective air-apertures (55) of the third part to form a third part of the multi-coaxial-injection-hole burner (53) surrounding coaxially the second part of the multi-coaxial-injection-hole burner(53), so that the first part (53a) of the multi-coaxial-injection-hole burner (53) keeps the flame of the gas turbine combustor (9) and the second and third parts of the multi-coaxial-injection-hole burner (53) perform the low NOx combustion.

3.  The gas turbine combustor (9) according to claim 1, wherein in each of the multi-coaxial-injection-hole burners (53), an $i_{th}$ row of the fuel nozzles (56) arranged circumferentially and an $i_{th}$ row of the air-apertures (55) arranged circumferentially are arranged coaxially so that the fuel nozzles (56) of the $i_{th}$ row are for the respective air-apertures (55) of the $i_{th}$ row to form an $i_{th}$ row of the multi-coaxial-injection-hole burner (53), an $(i+1)_{th}$ row of the fuel nozzles (56) arranged circumferentially and an $(i+1)_{th}$ row of the air-apertures (55) arranged circumferentially are arranged coaxially so that the fuel nozzles (56) of the $(i+1)_{th}$ row are for the respective air-apertures (55) of the $(i+1)_{th}$ row to form an $(i+1)_{th}$ row of the multi-coaxial-injection-hole burner (53) surrounding coaxially the $i_{th}$ row of the multi-coaxial-injection-hole burner (53), so that the $i_{th}$ row of the multi-coaxial-injection-hole burner (53) keeps a flame of the gas turbine combustor (9) and the $(i+1)_{th}$ row of the multi-coaxial-injection-hole burner (53) performs low NOx combustion, and when the diameter of each of the air-apertures (55) in the $i_{th}$ row of the multi-coaxial-injection-hole burner (53) is $D_i$, a total number of the air-apertures (55) in the $i_{th}$ row of the multi-coaxial-injection-hole burner (53) is $N_i$, the diameter of each of the air-apertures (55) in the $(i+1)_{th}$ row of the multi-coaxial-injection-hole burner (53) is $D_{i+1}$, a total number of the air-apertures (55) in the $(i+1)_{th}$ row of the multi-coaxial-injection-hole burner (53) is Nt+i, a base of natural logarithm is e, and i is one of 1, 2,3 and 4, the following formula

$$\frac{D_i}{D_{i+1}} = \sqrt{\frac{\pi \cdot \left(\dfrac{N_{i+1}}{N_i}\right)^{\frac{\pi^2}{26}}}{e \cdot \left\{1 + \left(\dfrac{N_{i+1}}{N_i}\right)^2\right\}}}$$

is satisfied,

4. The gas turbine combustor (9) according to claim 1 or 2, wherein the air-apertures (55) arranged circumferentially are distributed along an imaginary circumferential line, and a central axis of each of the air-apertures (55) arranged circumferentially extends in a respective tangential direction of the imaginary circumferential line.

5. The gas turbine combustor (9) according to claim 4, wherein the central axis of each of the air-apertures (55) arranged circumferentially extends in a respective radial direction of the imaginary circumferential line to urge the air radially inward.

6. The gas turbine combustor (9) according to claim 3, 4 or 5, wherein the air-apertures (55) of each of the $i_{th}$ row and the $(i+1)_{th}$ row arranged circumferentially are distributed along an imaginary circumferential line, and a central axis of each of the air-apertures (55) of each of the $i_{th}$ row and the $(i+1)_{th}$ row extends in a respective tangential direction of the imaginary circumferential line.

7. The gas turbine combustor (9) according to claim 6, wherein the central axis of each of the air-apertures (55) of each of the $i_{th}$ row and the $(i+1)_{th}$ row extends in a respective radial direction of the imaginary circumferential line to urge the air radially inward.

8. The gas turbine combustor (9) according to claim 1, wherein the air plate (54) includes a protrusion of one of cone-shape and truncated-cone-shape protruding at an outlet side of the air plate (54) from which outlet side a mixture of the fuel and an air discharged, and
in each of the multi-coaxial-injection-hole burners (53), a first part of the fuel nozzles (56) arranged circumferentially and a first part (55-1) of the air-apertures (55) arranged circumferentially are arranged coaxially so that the fuel nozzles (56) of the first part are for the respective air-apertures (55) of the first part to form a first part (53a) of the multi-coaxial-injection-hole burner (53) surrounding the protrusion, a second part of the fuel nozzles (56) arranged circumferentially and a second part of the air-apertures (55) arranged circumferentially are arranged coaxially so that the fuel nozzles (56) of the second part are for the respective air-apertures (55) of the second part to form a second part of the multi-coaxial-injection-hole burner (53) surrounding coaxially the first part (53a) of the multi-coaxial-injection-hole burner (53), a third part of the fuel nozzles (56) arranged circumferentially and a third part of the air-apertures (55) arranged circumferentially are arranged coaxially so that the fuel nozzles (56) of the third part are for the respective air-apertures (55) of the third part to form a third part of the multi-coaxial-injection-hole burner (53) surrounding coaxially the second part of the multi-coaxial-injection-hole burner (53), the cross-sectional area of each of the air-apertures (55) in the first part (53a) of the multi-coaxial-injection-hole burner (53) is smaller than the cross-sectional area of each of the air-apertures (55) in the second part of the multi-coaxial-injection-hole burner (53), and the cross-sectional area of each of the air-apertures (55) in the second part of the multi-coaxial-injection-hole burner (53) is smaller than the cross-sectional area of each of the air-apertures (55) in the third part of the multi-coaxial-injection-hole burner (53), so that the first part (53a) of the multi-coaxial-injection-hole burner (53) keeps a flame of the gas turbine combustor (9) and the second and third parts of the multi-coaxial-injection-hole burner (53) performs low NOx combustion.

9. The gas turbine combustor (9) according to claim 8, wherein the air-apertures (55) arranged circumferentially are distributed along an imaginary circumferential line, and a central axis of each of the air-apertures (55) arranged circumferentially extends in a respective tangential direction of the imaginary circumferential line.

10. The gas turbine combustor (9) according to claim 9, wherein the central axis of each of the air-apertures (55) arranged circumferentially extends in a respective radial direction of the imaginary circumferential line to urge the air radially inward.

**Patentansprüche**

1. Gasturbinenverbrennungsvorrichtung (9), um einen vergasten Brennstoff, der Wasserstoff als eine Komponente enthält, zu verbrennen, die Folgendes umfasst:

   mehrere Mehrfachkoaxialeinspritzloch-Brenner (53), wobei jeder dieser Brenner (53) mehrere Brennstoffdüsen (56) und eine Luftplatte (54), die mehrere Luftöffnungen (55) für die entsprechenden Brennstoffdüsen (56) enthält, enthält, wobei

   in jedem der Mehrfachkoaxialeinspritzloch-Brenner (53) ein erster Teil der Brennstoffdüsen (56), die in Umfangsrichtung angeordnet sind, und ein erster Teil (55-1) der Luftöffnungen (55), die in Umfangsrichtung angeordnet sind, koaxial angeordnet sind, derart, dass die Brennstoffdüsen (56) des ersten Teils für die entsprechenden Luftöffnungen (55) des ersten Teils (55-1) dienen, um einen ersten Teil (53a) des Mehrfachkoaxialeinspritzloch-Brenners (53) zu bilden, und ein zweiter Teil der Brennstoffdüsen (56), die in Umfangsrichtung angeordnet sind, und ein zweiter Teil (55-2) der Luftöffnungen (55), die in Umfangsrichtung angeordnet sind, koaxial angeordnet sind, derart, dass die Brennstoffdüsen (56) des zweiten Teils für die entsprechenden Luftöffnungen (55) des zweiten Teils dienen, um einen zweiten Teil (53b) des Mehrfachkoaxialeinspritzloch-Brenners (53), der den ersten Teil (53a) des Mehrfachkoaxialeinspritzloch-Brenners (53) koaxial umgibt, zu bilden, wobei eine Querschnittsfläche jeder der Luftöffnungen (55) im ersten Teil (53a) des Mehrfachkoaxialeinspritzloch-Brenners (53) kleiner als eine Querschnittsfläche jeder der Luftöffnungen (55) im zweiten Teil (53b) des Mehrfachkoaxialeinspritzloch-Brenners (53) ist, derart, dass der erste Teil (53a) des Mehrfachkoaxialeinspritzloch-Brenners (53) eine Flamme der Gasturbinenverbrennungsvorrichtung (9) hält und der zweite Teil (53b) des Mehrfachkoaxialeinspritzloch-Brenners (53) eine Verbrennung mit wenig NOx durchführt, und die mehreren Luftöffnungen (55) entsprechend in der Umfangsrichtung in der Luftplatte (54) angeordnet sind und eine Reihe der Luftöffnungen (55) bilden,

   **dadurch gekennzeichnet, dass** die mehreren Luftöffnungen in Einheiten von Reihen denselben Durchmesser besitzen, wobei

   dann, wenn der Durchmesser jeder der Luftöffnungen (55) im ersten Teil (53a) des Mehrfachkoaxialeinspritzloch-Brenners (53) $D_1$ ist, eine Gesamtanzahl der Luftöffnungen (55) im ersten Teil (53a) des Mehrfachkoaxialeinspritzloch-Brenners (53) $N_1$ ist, der Durchmesser jeder Luftöffnung (55) im zweiten Teil des Mehrfachkoaxialeinspritzloch-Brenners (53) $D_2$ ist, eine Gesamtanzahl der Luftöffnungen (55) im zweiten Teil des Mehrfachkoaxialeinspritzloch-Brenners (53) $N_2$ ist und eine Basis des natürlichen Logarithmus e ist, die folgende Formel

$$\frac{D_1}{D_2} = \sqrt{\frac{\left(\dfrac{N_2}{N_1}\right)^{\frac{\pi^2}{2e}}}{1 + \left(\dfrac{N_2}{N_1}\right)^2}}$$

   erfüllt ist.

2. Gasturbinenverbrennungsvorrichtung (9) nach Anspruch 1, wobei ein dritter Teil der Brennstoffdüsen (56), die in Umfangsrichtung angeordnet sind, und ein dritter Teil der Luftöffnungen (55), die in Umfangsrichtung angeordnet sind, derart koaxial angeordnet sind, dass die Brennstoffdüsen (56) des dritten Teils für die entsprechenden Luftöffnungen (55) des dritten Teils dienen, um einen dritten Teil des Mehrfachkoaxialeinspritzloch-Brenners (53) zu bilden, der den zweiten Teil des Mehrfachkoaxialeinspritzloch-Brenners (53) koaxial umgibt, derart, dass der erste Teil (53a) des Mehrfachkoaxialeinspritzloch-Brenners (53) die Flamme der Gasturbinenverbrennungsvorrichtung (9) hält und der zweite und der dritte Teil des Mehrfachkoaxialeinspritzloch-Brenners (53) die Verbrennung mit wenig NOx durchführen.

3. Gasturbinenverbrennungsvorrichtung (9) nach Anspruch 1, wobei
   in jedem der Mehrfachkoaxialeinspritzloch-Brenner (53) eine i-te Reihe der Brennstoffdüsen (56), die in Umfangsrichtung angeordnet ist, und eine i-te Reihe der Luftöffnungen (55), die in Umfangsrichtung angeordnet ist, koaxial angeordnet sind, derart, dass die Brennstoffdüsen (56) der i-ten Reihe für die entsprechenden Luftöffnungen (55) der i-ten Reihe dienen, um eine i-te Reihe des Mehrfachkoaxialeinspritzloch-Brenners (53) zu bilden, und eine (i + 1)-te Reihe der Brennstoffdüsen (56), die in Umfangsrichtung angeordnet ist, und eine (i + 1)-te Reihe der Luftöffnungen (55), die in Umfangsrichtung angeordnet ist, koaxial angeordnet sind, derart, dass die Brennstoffdüsen (56) der (i + 1)-ten Reihe für die entsprechenden Luftöffnungen (55) der (i + 1)-ten Reihe dienen, um eine (i + 1)-te Reihe des Mehrfachkoaxialeinspritzloch-Brenners (53), die die i-te Reihe des Mehrfachkoaxialeinspritzloch-Brenners (53) koaxial umgibt, zu bilden, derart, dass die i-te Reihe des Mehrfachkoaxialeinspritzloch-Brenners (53) eine Flamme der Gasturbinenverbrennungsvorrichtung (9) hält und die (i + 1)-te Reihe des Mehrfachkoaxialeinspritzloch-Brenners (53) eine Verbrennung mit wenig NOx durchführt, und

dann, wenn der Durchmesser jeder der Luftöffnungen (55) in der i-ten Reihe des Mehrfachkoaxialeinspritzloch-Brenners (53) $D_i$ ist, eine Gesamtanzahl der Luftöffnungen (55) in der i-ten Reihe des Mehrfachkoaxialeinspritzloch-Brenners (53) $N_i$ ist, der Durchmesser jeder Luftöffnung (55) in der (i + 1)-ten Reihe des Mehrfachkoaxialeinspritzloch-Brenners (53) $D_{i+1}$ ist, eine Gesamtanzahl der Luftöffnungen (55) in der (i + 1)-ten Reihe des Mehrfachkoaxialein-spritzloch-Brenners (53) $N_{i+1}$ ist, eine Basis des natürlichen Logarithmus e ist und i gleich 1, 2, 3 oder 4 ist, die folgende Formel

$$\frac{D_i}{D_{i+1}} = \sqrt{\frac{\pi \cdot \left(\frac{N_{i+1}}{N_i}\right)^{\frac{\pi^2}{2e}}}{e \cdot \left\{1 + \left(\frac{N_{i+1}}{N_i}\right)^2\right\}}}$$

erfüllt ist.

4. Gasturbinenverbrennungsvorrichtung (9) nach Anspruch 1 oder 2, wobei die Luftöffnungen (55), die in Umfangsrichtung angeordnet sind, entlang einer imaginären Umfangslinie verteilt sind und eine Mittelachse jeder der Luftöffnungen (55), die in Umfangsrichtung angeordnet sind, in einer entsprechenden Tangentialrichtung der imaginären Umfangslinie verläuft.

5. Gasturbinenverbrennungsvorrichtung (9) nach Anspruch 4, wobei die Mittelachse jeder der Luftöffnungen (55), die in Umfangsrichtung angeordnet sind, in einer entsprechenden Radialrichtung der imaginären Umfangslinie verläuft, um die Luft radial nach innen zu drängen.

6. Gasturbinenverbrennungsvorrichtung (9) nach Anspruch 3, 4 oder 5, wobei die Luftöffnungen (55) sowohl der i-ten Reihe als auch der (i + 1)-ten Reihe, die in Umfangsrichtung angeordnet sind, entlang einer imaginären Umfangslinie verteilt sind und eine Mittelachse jeder der Luftöffnungen (55) sowohl der i-ten Reihe als auch der (i + 1)-ten Reihe in einer entsprechenden Tangentialrichtung der imaginären Umfangslinie verläuft.

7. Gasturbinenverbrennungsvorrichtung (9) nach Anspruch 6, wobei die Mittelachse jeder der Luftöffnungen (55) sowohl der i-ten Reihe als auch der (i + 1)-ten Reihe in einer entsprechenden Radialrichtung der imaginären Umfangslinie verläuft, um die Luft radial nach innen zu drängen.

8. Gasturbinenverbrennungsvorrichtung (9) nach Anspruch 1, wobei die Luftplatte (54) einen kegelförmigen oder kegelstumpfförmigen Überstand besitzt, der auf einer Auslassseite der Luftplatte (54) vorsteht, wobei von der Auslassseite eine Mischung des Brennstoffs mit Luft ausgestoßen wird, und

in jedem der Mehrfachkoaxialeinspritzloch-Brenner (53) ein erster Teil der Brennstoffdüsen (56), die in Umfangsrichtung angeordnet sind, und ein erster Teil (55-1) der Luftöffnungen (55), die in Umfangsrichtung angeordnet sind, koaxial angeordnet sind, derart, dass die Brennstoffdüsen (56) des ersten Teils für die entsprechenden Luftöffnungen (55) des ersten Teils dienen, um einen ersten Teil (53a) des Mehrfachkoaxialeinspritzloch-Brenners (53), der den Überstand umgibt, zu bilden, ein zweiter Teil der Brennstoffdüsen (56), die in Umfangsrichtung angeordnet sind, und ein zweiter Teil der Luftöffnungen (55), die in Umfangsrichtung angeordnet sind, koaxial angeordnet sind, derart, dass die Brennstoffdüsen (56) des zweiten Teils für die entsprechenden Luftöffnungen (55) des zweiten Teils dienen, um einen zweiten Teil des Mehrfachkoaxialeinspritzloch-Brenners (53) zu bilden, der den ersten Teil (53a) des Mehrfachkoaxialeinspritzloch-Brenners (53) koaxial umgibt, und ein dritter Teil der Brennstoffdüsen (56), die in Umfangsrichtung angeordnet sind, und ein dritter Teil der Luftöffnungen (55), die in Umfangsrichtung angeordnet sind, koaxial angeordnet sind, derart, dass die Brennstoffdüsen (56) des dritten Teils für die entsprechenden Luftöffnungen (55) des dritten Teils dienen, um einen dritten Teil des Mehrfachkoaxialeinspritzloch-Brenners (53) zu bilden, der den zweiten Teil des Mehrfachkoaxialeinspritzloch-Brenners (53) koaxial umgibt, wobei die Querschnittsfläche jeder der Luftöffnungen (55) im ersten Teil (53a) des Mehrfachkoaxialeinspritzloch-Brenners (53) kleiner als eine Querschnittsfläche jeder der Luftöffnungen (55) im zweiten Teil des Mehrfachkoaxialeinspritzloch-Brenners (53) ist und die Querschnittsfläche jeder der Luftöffnungen (55) im zweiten Teil des Mehrfachkoaxialeinspritzloch-Brenners (53) kleiner als die Querschnittsfläche jeder der Luftöffnungen (55) im dritten Teil des Mehrfachkoaxialeinspritzloch-Brenners (53) ist, derart, dass der erste Teil (53a) des Mehrfachkoaxialeinspritzloch-Brenners (53) eine Flamme der Gasturbinenverbrennungsvorrichtung (9) hält und der zweite und der dritte Teil des Mehrfachkoaxialeinspritzloch-Brenners (53) eine Verbrennung mit wenig NOx durchführen.

9. Gasturbinenverbrennungsvorrichtung (9) nach Anspruch 8, wobei die Luftöffnungen (55), die in Umfangsrichtung angeordnet sind, entlang einer imaginären Umfangslinie verteilt sind und eine Mittelachse jeder der Luftöffnungen (55), die in Umfangsrichtung angeordnet sind, in einer entsprechenden Tangentialrichtung der imaginären Umfangslinie verläuft.

10. Gasturbinenverbrennungsvorrichtung (9) nach Anspruch 9, wobei die Mittelachse jeder der Luftöffnungen (55), die in Umfangsrichtung angeordnet sind, in einer entsprechenden Radialrichtung der imaginären Umfangslinie verläuft, um die Luft radial nach innen zu drängen.

## Revendications

1. Unité de combustion de turbine à gaz (9) pour la combustion d'un combustible gazéifié incluant de l'hydrogène comme composant, comprenant
une pluralité de brûleurs à trous d'injection coaxiaux multiples (53), chacun de ces brûleurs (53) incluant une pluralité de buses de combustible (56) et une plaque à air (54) incluant une pluralité d'ouvertures d'air (55) pour les buses de combustible respectives (56),
dans lequel, dans chacun des brûleurs à trous d'injection coaxiaux multiples (53), une première partie des buses de combustible (56) disposées circonférentiellement et une première partie (55-1) des ouvertures d'air (55) disposées circonférentiellement sont disposées coaxialement de sorte que les buses de combustible (56) de la première partie sont pour les ouvertures d'air respectives (55) de la première partie (55-1) afin de former une première partie (53a) du brûleur à trous d'injection coaxiaux multiples (53), une deuxième partie des buses de combustible (56) disposées circonférentiellement et une deuxième partie (55-2) des ouvertures d'air (55) disposées circonférentiellement sont disposées coaxialement de sorte que les buses de combustible (56) de la deuxième partie sont pour les ouvertures d'air respectives (55) de la deuxième partie afin de former une deuxième partie (53b) du brûleur à trous d'injection coaxiaux multiples (53) entourant coaxialement la première partie (53a) du brûleur à trous d'injection coaxiaux multiples (53), une aire de section transversale de chacune des ouvertures d'air (55) dans la première partie (53a) du brûleur à trous d'injection coaxiaux multiples (53) est inférieure à une aire de section transversale de chacune des ouvertures d'air (55) dans la deuxième partie (53b) du brûleur à trous d'injection coaxiaux multiples (53), de sorte que la première partie (53a) du brûleur à trous d'injection coaxiaux multiples (53) maintient une flamme de l'unité de combustion de turbine à gaz (9) et la deuxième partie (53b) du brûleur à trous d'injection coaxiaux multiples (53) effectue une combustion à faible taux de NOx, et la pluralité des ouvertures d'air (55) sont respectivement disposées dans la direction circonférentielle dans la plaque à air (54) et forment une rangée des ouvertures (55), **caractérisée en ce que** la pluralité des ouvertures d'air (55) ont un diamètre identique dans une unité de rangée, dans laquelle, lorsque le diamètre de chacune des ouvertures d'air (55) dans la première partie (53a) du brûleur à trous d'injection coaxiaux multiples (53) est $D_1$, un nombre total des ouvertures d'air (55) dans la première partie (53a) du brûleur à trous d'injection coaxiaux multiples (53) est $N_1$, le diamètre de chacune des ouvertures d'air (55) dans la deuxième partie du brûleur à trous d'injection coaxiaux multiples (53) est $D_2$, un nombre total des ouvertures d'air (55) dans la deuxième partie du brûleur à trous d'injection coaxiaux multiples (53) est $N_2$ et une base du logarithme naturel est e, la formule suivante

$$\frac{D_1}{D_2} = \sqrt{\frac{\left(\dfrac{N_2}{N_1}\right)^{\frac{\pi^2}{2a}}}{1+\left(\dfrac{N_2}{N_1}\right)^2}}$$

est satisfaite.

**2.** Unité de combustion de turbine à gaz (9) selon la revendication 1, dans laquelle une troisième partie des buses de combustible (56) disposées circonférentiellement et une troisième partie des ouvertures d'air (55) disposées circonférentiellement sont disposées coaxialement de sorte que les buses de combustible (56) de la troisième partie sont pour les ouvertures d'air respectives (55) de la troisième partie afin de former une troisième partie - du brûleur à trous d'injection coaxiaux multiples (53) entourant coaxialement la deuxième partie du brûleur à trous d'injection coaxiaux multiples (53), de sorte que la première partie (53a) du brûleur à trous d'injection coaxiaux multiples (53) maintient la flamme de l'unité de combustion de turbine à gaz (9) et que les deuxième et troisième parties du brûleur à trous d'injection coaxiaux multiples (53) effectuent la combustion à faible taux de NOx.

**3.** Unité de combustion de turbine à gaz (9) selon la revendication 1,
dans laquelle, dans chacun des brûleurs à trous d'injection coaxiaux multiples (53), une $i^{ème}$ rangée des buses de combustible (56) disposées circonférentiellement et une $i^{ème}$ rangée des ouvertures d'air (55) disposées circonférentiellement sont disposées coaxialement de sorte que les buses de combustible (56) de la $i^{ème}$ rangée sont pour les ouvertures d'air respectives (55) de la $i^{ème}$ rangée afin de former une $i^{ème}$ rangée du brûleur à trous d'injection coaxiaux multiples (53), une $(i+1)^{ème}$ rangée des buses de combustible (56) disposées circonférentiellement et une $(i+1)^{ème}$ rangée des ouvertures d'air (55) disposées circonférentiellement sont disposées coaxialement de sorte que les buses de combustible (56) de la $(i+1)^{ème}$ rangée sont pour les ouvertures d'air respectives (55) de la $(i+1)^{ème}$ rangée afin de former une $(i+1)^{ème}$ rangée du brûleur à trous d'injection coaxiaux multiples (53) entourant coaxialement la $i^{ème}$ rangée du brûleur à trous d'injection coaxiaux multiples (53) de sorte que la $i^{ème}$ rangée du brûleur à trous d'injection coaxiaux multiples (53) maintient une flamme de l'unité de combustion de turbine à gaz (9) et la $(i+1)^{ème}$ rangée du brûleur à trous d'injection coaxiaux multiples (53) effectue une combustion à faible taux de NOx, et lorsque le diamètre de chacune des ouvertures d'air (55) dans la $i^{ème}$ rangée du brûleur à trous d'injection coaxiaux multiples (53) est $D_i$, un nombre total des ouvertures d'air (55) dans la $i^{ème}$ rangée du brûleur à trous d'injection coaxiaux multiples (53) est $N_i$, le diamètre de chacune des ouvertures d'air (55) dans la $(i+1)^{ème}$ rangée du brûleur à trous d'injection coaxiaux multiples (53) est $D_{i+1}$, le nombre total des ouvertures d'air (55) dans la $(i+1)^{ème}$ rangée du brûleur à trous d'injection coaxiaux multiples (53) est $N_{i+1}$, une base du logarithme naturel est e et i est un entier parmi 1, 2, 3 ou 4, la formule suivante

$$\frac{D_i}{D_{i+1}} = \sqrt{\frac{\pi \cdot \left(\frac{N_{i+1}}{N_i}\right)^{\frac{\pi^2}{2e}}}{e \cdot \left\{1 + \left(\frac{N_{i+1}}{N_i}\right)^2\right\}}}$$

est satisfaite.

**4.** Unité de combustion de turbine à gaz (9) selon la revendication 1 ou 2, dans laquelle les ouvertures d'air (55) disposées circonférentiellement sont réparties le long d'une ligne circonférentielle imaginaire, et un axe central de chacune des ouvertures d'air (55) disposées circonférentiellement s'étend dans une direction tangentielle respective à la ligne circonférentielle imaginaire.

**5.** Unité de combustion de turbine à gaz (9) selon la revendication 4, dans laquelle l'axe central de chacune des ouvertures d'air (55) disposées circonférentiellement s'étend dans une direction radiale respective de la ligne périphérique imaginaire pour amener l'air radialement vers l'intérieur.

**6.** Unité de combustion de turbine à gaz (9) selon la revendication 3, 4 ou 5, dans laquelle les ouvertures d'air (55) de chacune de la $i^{ème}$ rangée et de la $(i+1)^{ème}$ rangée disposées circonférentiellement sont réparties le long d'une ligne circonférentielle imaginaire, et un axe central de chacune des ouvertures d'air (55) de chacune de la $i^{ème}$ rangée et de la $(i+1)^{ème}$ rangée s'étend dans une direction tangentielle respective à la ligne circonférentielle imaginaire.

**7.** Unité de combustion de turbine à gaz (9) selon la revendication 6, dans laquelle l'axe central de chacune des ouvertures d'air (55) de chacune de la $i^{ème}$ rangée et de la $(i+1)^{ème}$ rangée s'étend dans une direction radiale respective de la ligne circonférentielle imaginaire pour amener l'air radialement vers l'intérieur.

8. Unité de combustion de turbine à gaz (9) selon la revendication 1, dans laquelle la plaque à air (54) inclut une saillie d'une forme parmi une forme conique et une forme tronconique faisant saillie sur un côté sortie de la plaque à air (54) duquel sort un mélange du combustible et d'air déchargé, et
dans chacun des brûleurs à trous d'injection coaxiaux multiples (53), une première partie des buses de combustible (56) disposées circonférentiellement et une première partie (55-1) des ouvertures d'air (55) disposées circonférentiellement sont disposées coaxialement de sorte que les buses de combustible (56) de la première partie sont pour les ouvertures d'air respectives (55) de la première partie afin de former une première partie (53a) du brûleur à trous d'injection coaxiaux multiples (53) entourant la saillie, une deuxième partie des buses de combustible (56) disposées circonférentiellement et une deuxième partie des ouvertures d'air (55) disposées circonférentiellement sont disposées coaxialement de sorte que les buses de combustible (56) de la deuxième partie sont pour les ouvertures d'air respectives (55) de la deuxième partie afin de former une deuxième partie du brûleur à trous d'injection coaxiaux multiples (53) entourant coaxialement la première partie (53a) du brûleur à trous d'injection coaxiaux multiples (53), une troisième partie des buses de combustible (56) disposées circonférentiellement et une troisième partie des ouvertures d'air (55) disposées circonférentiellement sont disposées coaxialement de sorte que les buses de combustible (56) de la troisième partie sont pour les ouvertures d'air respectives (55) de la troisième partie afin de former une troisième partie du brûleur à trous d'injection coaxiaux multiples (53) entourant coaxialement la deuxième partie du brûleur à trous d'injection coaxiaux multiples (53), l'aire de section transversale de chacune des ouvertures d'air (55) dans la première partie (53a) du brûleur à trous d'injection coaxiaux multiples (53) est inférieure à l'aire de section transversale de chacune des ouvertures d'air (55) dans la deuxième partie du brûleur à trous d'injection coaxiaux multiples (53), et l'aire de section transversale de chacune des ouvertures d'air (55) dans la deuxième partie du brûleur à trous d'injection coaxiaux multiples (53) est inférieure à l'aire de section transversale de chacune des ouvertures d'air (55) dans la troisième partie du brûleur à trous d'injection coaxiaux multiples (53), de sorte que la première partie (53a) du brûleur à trous d'injection coaxiaux multiples (53) maintient une flamme de l'unité de combustion (9) de turbine à gaz et que les deuxième et troisième parties du brûleur à trous d'injection coaxiaux multiples (53) effectuent une combustion à faible taux de NOx.

9. Unité de combustion de turbine à gaz (9) selon la revendication 8, dans laquelle les ouvertures d'air (55) disposées circonférentiellement sont réparties le long d'une ligne circonférentielle imaginaire, et un axe central de chacune des ouvertures d'air (55) disposées circonférentiellement s'étend dans une direction tangentielle respective à la ligne circonférentielle imaginaire.

10. Unité de combustion de turbine à gaz (9) selon la revendication 9, dans laquelle l'axe central de chacune des ouvertures d'air (55) disposées circonférentiellement s'étend dans une direction radiale respective de la ligne circonférentielle imaginaire pour amener l'air radialement vers l'intérieur.

FIG. 1

# FIG. 2

# FIG. 3

# FIG. 4

## FIG. 5

## FIG. 6

# FIG. 7

# FIG. 8

## FIG. 9

Y-axis: HYDROGEN CONCENTRATION (mol.%)

STABLE COMBUSTION
MAINTAINING RANGE

X-axis: MAIN BURNER INNER CIRCUMFERENTIAL
MIXING AVERAGE TEMPERATURE $T_{mix}$

## FIG. 10

Y-axis: MAIN BURNER OUTER CIRCUMFERENTIAL
HYDROGEN CONCENTRATION (mol.%)

FLAME APPROACH
RANGE

X-axis: MAIN BURNER OUTER CIRCUMFERENTIAL
AVERAGE TEMPERATURE $T_{mixOut}$

# FIG. 11

OUTER CIRCUMFERENTIAL HYDROGEN
CONCENTRATION OF COMPARATIVE EXAMPLE

INNER CIRCUMFERENTIAL
HYDROGEN CONCENTRATION
OF EMBODIMENT

INNER CIRCUMFERENTIAL
HYDROGEN CONCENTRATION
OF COMPARATIVE EXAMPLE

OUTER CIRCUMFERENTIAL
HYDROGEN CONCENTRATION
OF EMBODIMENT

MAIN BURNER INNER
CIRCUMFERENTIAL FUEL RATIO (%)

# FIG. 12

COMPARATIVE EXAMPLE

EMBODIMENT

MAIN BURNER INNER CIRCUMFERENTIAL FUEL RATIO (%)

HYDROGEN CONCENTRATION (%)

# FIG. 13

INNER CIRCUMFERENTIAL
COMBUSTION GAS TEMPERATURE
OF COMPARATIVE EXAMPLE

INNER CIRCUMFERENTIAL
COMBUSTION GAS TEMPERATURE
OF EMBODIMENT

NOx EMISSION OF
COMBUSTOR ACCORDING TO
COMPARATIVE EXAMPLE

NOx EMISSION OF COMBUSTOR
ACCORDING TO EMBODIMENT

INNER CIRCUMFERENTIAL
COMBUSTION GAS TEMPERATURE

NOx EMISSION (ppm)

MAIN BURNER INNER CIRCUMFERENTIAL FUEL RATIO (%)

FIG.14

FIG. 15

FIG.16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007113487 A
- JP 2008292139 A
- EP 1985920 A2